# EUROPEAN PATENT SPECIFICATION

(11) **EP 3 817 286 B1**
(45) Date of publication and mention of the grant of the patent: **24.01.2024**
(21) Application number: 19811591.7
(22) Date of filing: 23.05.2019
(51) Int. Cl.: H04L 45/00, H04L 45/02, H04L 41/12, H04W 24/02

(54) **METHOD AND APPARATUS FOR GENERATING NETWORK TOPOLOGY**
VERFAHREN UND VORRICHTUNG ZUR ERZEUGUNG EINER NETZWERKTOPOLOGIE
PROCÉDÉ ET APPAREIL PERMETTANT DE GÉNÉRER UNE TOPOLOGIE DE RÉSEAU

(30) Priority: 28.05.2018 CN 201810525425
(43) Date of publication of application: 05.05.2021
(73) Proprietor: HUAWEI TECHNOLOGIES CO., LTD., Shenzhen, Guangdong 518129 (CN)
(72) Inventor: PAN, Dongcheng, Shenzhen, Guangdong 518129 (CN); WEI, Hanyu, Shenzhen, Guangdong 518129 (CN); HU, Yinliang, Shenzhen, Guangdong 518129 (CN); FAN, Duoliang, Shenzhen, Guangdong 518129 (CN)
(74) Representative: Pfenning, Meinig & Partner mbB
(86) International application number: PCT/CN2019/088194
(87) International publication number: WO 2019/228251

(56) References cited:
- WO-A1-2005/125094
- CN-A- 101 064 631
- CN-A- 105 959 150
- CN-A- 106 341 330

## Description

### TECHNICAL FIELD

This application relates to the field of network technologies, and in particular, to a network topology generation method and apparatus.

### BACKGROUND

Packets are usually transmitted on a network by using various network devices such as a switch and a router. After a source device sends a packet, the packet is successively forwarded by network devices, and finally arrives at a destination device. To implement a packet transmission function, the network device needs to exchange information with adjacent network devices, receive device information of the adjacent network devices, and generate a network topology including the network device and the adjacent network devices based on the device information of the adjacent network devices, so as to determine a forwarding path of the packet based on the network topology.

That the network device is a switch is used as an example. A conventional switch operates at a data link layer (also referred to as a layer 2 or an L2 layer), is capable of identifying a communication protocol of the data link layer, stores a forwarding table of a media access control (Media Access Control, MAC for short below) address, and may exchange device information with an adjacent switch based on the protocol of the data link layer and the forwarding table, so as to construct a network topology based on the device information of the switches. Specifically, a spanning tree protocol (Spanning Tree Protocol, STP for short below) and a bridge protocol data unit (Bridge Protocol Data Unit, BPDU for short below) are specified in the data link layer. A destination MAC address of the BPDU is a multicast address: 0 1-80-C2-00-00-00, and a source MAC address of the BPDU is an identifier (Identifier, ID for short below) of a switch. Each switch on a network is capable of identifying, processing, and sending a BPDU. Different switches send/receive BPDUs to/from each other, parse BPDU content, and perform a plurality of steps such as selecting a root bridge, a root port, a designated port, and a blocked port. The switches make the blocked port disabled and a remaining port enter into a forwarding state, so that the network topology is generated.

The foregoing solution requires that network devices should be capable of identifying the protocol of the data link layer, and therefore is applicable only to a network device operating at the data link layer. However, a network device operating at a physical layer is incapable of identifying the protocol of the data link layer, let alone parsing a BPDU. Consequently, the foregoing solution cannot be used to generate a network topology.

A topology discovery method and system is described in CN 106341330 A. CN 101064631 A describes a topology structure scanning method. CN 105959150 A addresses realizing a unified network management platform of an ADOA (Auto Discovery Operate and Administrator) system. A service method for transmitting/receiving an SMS or MMS information from a mobile terminal to a residential device is described in WO 2015/125094 A1.

### SUMMARY

The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF DRAWINGS

FIG. 1 is a schematic diagram of an implementation environment according to an embodiment of this application;
FIG. 2 is a schematic diagram of an implementation environment according to an embodiment of this application;
FIG. 3 is a function architecture diagram of a switch according to an embodiment of this application;
FIG. 4 is a flowchart of a network topology generation method according to an embodiment of this application;
FIG. 5 is a schematic structural diagram of a network topology according to an embodiment of this application;
FIG. 6 is a schematic diagram of port indication information according to an embodiment of this application;
FIG. 7 is a schematic diagram of port indication information according to an embodiment of this application;
FIG. 8 is a schematic diagram of a packet according to an embodiment of this application;
FIG. 9 is a schematic diagram of a packet according to an embodiment of this application;
FIG. 10 is a schematic structural diagram of a network topology according to an embodiment of this application;
FIG. 11 is a flowchart of a network topology generation method according to an embodiment of this application;
FIG. 12 is a schematic structural diagram of a network topology according to an embodiment of this application;
FIG. 13 is a schematic diagram of a packet according to an embodiment of this application;
FIG. 14 is a schematic diagram of a packet according to an embodiment of this application;
FIG. 15 is a flowchart of a network topology generation method according to an embodiment of this application;
FIG. 16 is a schematic diagram of a port mapping relationship of a network device according to an embodiment of this application;
FIG. 17 is a schematic diagram of a port mapping relationship of a network device according to an embodiment of this application;
FIG. 18 is a schematic diagram of a tree network topology according to an embodiment of this application;
FIG. 19 is a flowchart of a network topology generation method according to an embodiment of this application;
FIG. 20 is a schematic diagram of a link fault that occurs in a network topology according to an embodiment of this application;
FIG. 21 is a schematic diagram of updating a port mapping relationship according to an embodiment of this application;
FIG. 22 is a schematic diagram of network topology reconstruction according to an embodiment of this application;
FIG. 23 is a schematic structural diagram of a network topology generation apparatus according to an embodiment of this application;
FIG. 24 is a schematic structural diagram of a network topology generation apparatus according to an embodiment of this application; and
FIG. 25 is a schematic structural diagram of an electronic device according to an embodiment of this application.

### DESCRIPTION OF EMBODIMENTS

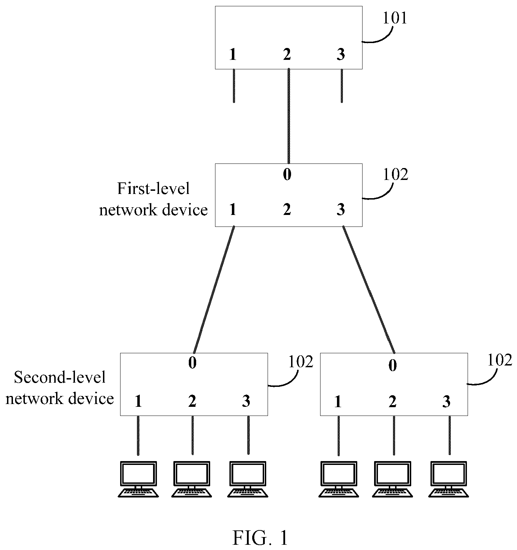

FIG. 1 is a schematic diagram of an implementation environment according to an embodiment of this application. The implementation environment includes central equipment 101 and a plurality of network devices 102, and the central equipment 101 is connected to each network device 102 by using a network.

The central equipment 101 has a function of managing a network device, and may act as a management center of a network. The central equipment 101 is configured to manage the network device 102. Optionally, the central equipment 101 may further has a data forwarding function, and the central equipment 101 may be configured to forward a packet that is transmitted on the network. The central equipment 101 may receive a packet of any network device 102, and send the packet to another network device 102.

The central equipment 101 may include a switch, a router, an optical line terminal (optical line terminal, OLT for short below), and the like. For example, the central equipment 101 may be an OLT device on a passive optical network (Passive Optical Network, PON for short below). Certainly, the central equipment 101 may alternatively be another device that has a network management function. Optionally, applied to an internet of things, the central equipment 101 may be any device that has a function of managing a device and that is on the internet of things. For example, the central equipment 101 may include an internet-of-things gateway.

The network device 102 has a data transmission function, and may act as a basic device of a network. The network device 102 may be configured to forward a packet. For example, the network device 102 may receive a packet sent by a source terminal, and send the packet to the central equipment 101. For another example, the network device 102 may receive a packet sent by the central equipment 101, and send the packet to a destination terminal.

The network device 102 may be a switch, a router, an optical network terminal (Optical network terminal, ONT for short below), an optical network unit (Optical Network Unit, ONU for short below), or an optical splitter. Optionally, the network device 102 may be any device on the internet of things. For example, the network device 102 may include a device that belongs to a user, a device placed by a service provider on a user side, an infrastructure device, and a device in a public place. For example, the network device 102 may include a manhole cover, a fire hydrant, a water meter, an electricity meter, a street lamp, a bicycle, and an automobile.

In this embodiment, the network device 102 may be a device working at a physicallayer (Physical Layer) on the network, and may be referred to as an L1 layer device, a physical layer device, or a layer 1 network device.

The central equipment 101 and the network device 102 may be connected in a direct connection manner or an indirect connection manner. That the central equipment 101 and the network device 102 are directly connected means that a downlink port of the central equipment 101 is connected to an uplink port of the network device 102. That the central equipment 101 and the network device 102 are indirectly connected means that a downlink port of the central equipment 101 is connected to an uplink port of another device, and a downlink port of the another device is connected to an uplink port of the network device 102.

Through the direct connection manner and the indirect connection manner, the plurality of network devices 102 may form a multi-level network topology. At least one network device 102 directly connected to the central equipment 101 forms a first-level network topology, where each network device 102 in the first-level network topology may be used as a first-level network device, and the first-level network device can directly exchange information with the central equipment 101. Likewise, at least one network device directly connected to the first-level network device forms a second-level network topology, where each network device 102 in the second-level network topology may be used as a second-level network device 102, and the second-level network device 102 can exchange information with the central equipment 101 by using a packet forwarding function of the first-level network device 102.

Based on the implementation environment shown in FIG. 1, the central equipment 101 and the plurality of network devices 102 may form a multi-level network, for example, may form a network with three or more levels. Using a three-level network as an example, the central equipment 101 is corresponding to a core layer network, a first-level network device is corresponding to an aggregation layer network, and a second-level network device is corresponding to an access layer network. The core layer network is a backbone of the entire network, and plays a key role in connecting the entire network. The access layer network is a part of the entire network oriented to a user connection or network access. The aggregation layer network is used to aggregate traffic of the access layer network, and provide an uplink over which the core layer network is reached.

The central equipment may be a core switch or a core router as a device deployed on the core layer network, the first-level network device may be an aggregation switch as a device deployed on the aggregation layer network, and the second-level network device may be an access switch as a device deployed on the access layer network.

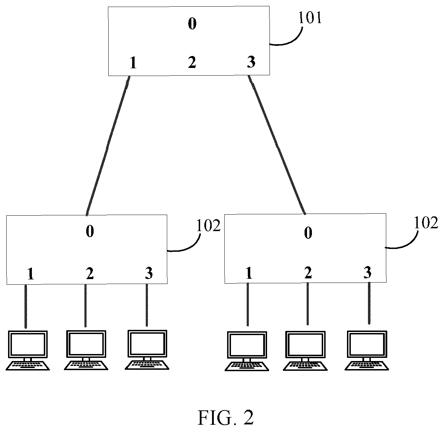

It should be noted that the foregoing uses an example for description in which networking is performed based on an architecture of the three-level network. In a possible implementation, a network with more or fewer than three levels may be used for networking. For example, referring to FIG. 2, a two-level network including a core layer network and an access layer network is deployed without an aggregation layer network. In a networking architecture shown in FIG. 2, central equipment is directly connected to each network device.

The following provides descriptions with reference to example application scenarios.

At present, a conventional packet switching technology (Packet switching technology, or referred to as a packet-switched technology) is used for a switch on an Ethernet. A packet is horizontally switched and vertically switched through MAC address learning and lookup. A function architecture of the switch includes MAC aggregation, packet parsing, packet editing, packet switching, traffic management, and the like. Such a function architecture is relatively proper on a horizontal switching network, but with popularization of data centers, network traffic is mainly based on vertical switching and a requirement for horizontal switching gradually decreases. Functions supporting horizontal switching in an original two-level switching solution become redundant and complex, resulting in excessively high power consumption of the running switch and an increase of unnecessary costs. Therefore, in a network architecture using a data center as its center, a network device should vertically transmit data of user equipment to the data center, just like a pipeline does, without using the complex functions of the conventional switch. This implements features of the switch: low power consumption, maintenance-free, and a simplified function.

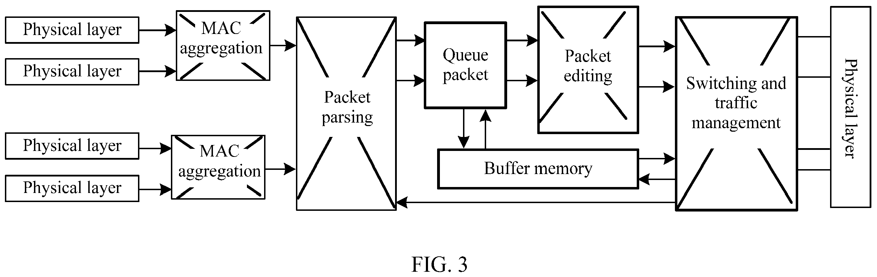

In view of this, refer to FIG. 3. FIG. 3 is a function architecture diagram of a switch according to an embodiment of this application. Functions of the switch such as MAC aggregation, packet parsing, and packet editing are removed, and data packet MAC switching is replaced with a bit block (data block) aggregation manner. This can greatly reduce complexity and power consumption of the switch. According to an experiment assessment, with a same throughput, from perspectives of power consumption and a scale of a chip, power consumption and a scale of a PHY (physical layer) aggregation chip can be reduced by six times compared with those of a MAC aggregation chip; and from a perspective of costs of a chip, costs of the PHY aggregation chip can be reduced by ten times compared with those of the MAC aggregation chip.

However, after the MAC layer network functions of the switch are removed, the switch has only physical layer network functions; only can aggregate and distribute data of an uplink port and a downlink port, but cannot identify a layer 2 network protocol, a layer 3 network protocol, or a higher layer network protocol; and only stores a port mapping relationship of the device, but cannot be aware of a network topology. Therefore, the existing layer 2 network protocol and layer 3 network protocol cannot be used, and a novel topology construction solution that can support a physical layer network protocol needs to be provided.

This embodiment of this application can be applied to a network device at a physical layer, and can be used to resolve an issue of implementing network topology construction under a condition that the network device cannot identify a higher layer network protocol and is unaware of a network topology.

In an example scenario, this embodiment of this application can be applied to various networks including a switch, for example, an Ethernet access network, an enterprise switch network, and a campus switch network. When network traffic is mainly based on vertical transmission and a requirement for horizontal switching decreases after a network using a data center as its center is deployed, the switch for performing a method provided in the embodiments of this application can substitute for a conventional switch, so as to greatly reduce complexity, power consumption, and costs of the switch. In an example application scenario, a method provided in the embodiments of this application can be applied to a next-generation access switch, and is applicable to scenarios such as fiber-to-the-building (Fiber to The Building, FTTB for short below) upgrading and network infrastructure co-construction and sharing.

In another example application scenario, this embodiment of this application can be applied to an internet-of-things scenario. Various internet-of-things devices perform a method provided in the embodiments of this application, so as to construct a network topology including the internet-of-things devices, and implement connections between a large quantity of intemet-of-things devices in the internet of things, thereby implementing a function of making all things connected. In addition, in the method that is provided in the embodiments of this application and that includes simple steps in which the devices are not required to be capable of identifying a higher layer protocol, requirements for low power consumption, low costs, and maintenance-free of the internet-of-things devices can be satisfied. This reduces device manufacturing costs and energy overheads caused by running of the devices.

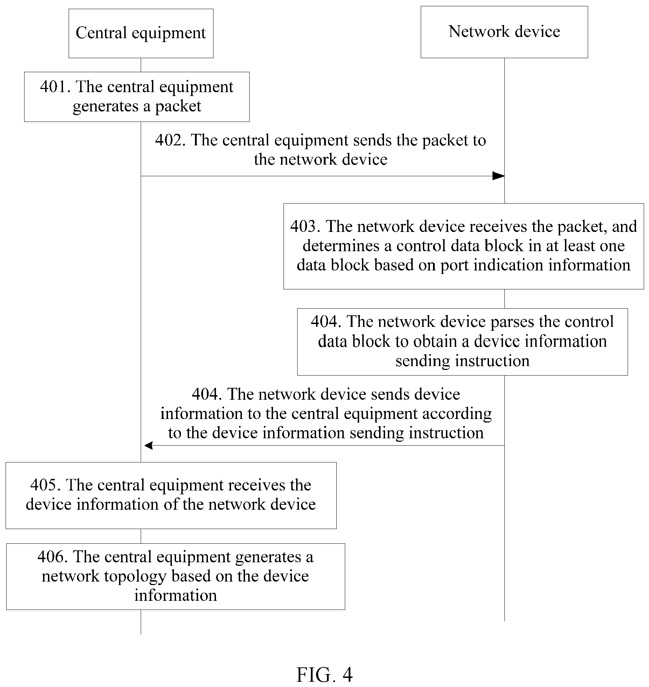

In this embodiment of this application, central equipment can find device information of a network device directly connected to the central equipment, to construct a first-level network topology. The following provides detailed descriptions with reference to an embodiment in FIG. 4.

FIG. 4 is a flowchart of a network topology generation method according to an embodiment of this application. Interaction entities in the method include central equipment and a network device. The method includes the following steps.

401. The central equipment generates a packet, where the packet includes port indication information and at least one data block.

With respect to an occasion for generating a packet by the central equipment, the central equipment may generate a packet on any occasion for network topology construction. For example, the central equipment may generate a packet when a network device accesses a network, that is, when the network device goes online on the network, so as to obtain device information of the network device during network initialization. For another example, the central equipment may periodically generate a packet, so as to periodically obtain device information of a network device, and regularly update a network topology. For still another example, the central equipment may generate a packet when receiving an instruction, where the instruction may be triggered by an input operation of the central equipment, so that the central equipment can construct a network topology in real time based on a user requirement and a current network status. For yet another example, the central equipment may generate a packet at a specified time point, so as to obtain a network topology corresponding to the specified time point. The occasion for generating a packet by the central equipment is not limited in this embodiment.

That a packet is generated when a network device accesses a network is used as an example. When the network device accesses the network, a core network device can detect that the network device has accessed the network, and then a packet is generated.

With respect to an implementation of detecting whether a network device has accessed a network, in a possible implementation, the central equipment may determine a status of each downlink port. When any downlink port is in an enabled (up) state, the central equipment may determine that a network device connected to the downlink port has accessed a network; or when any downlink port is in a disabled (down) state, the central equipment may determine that a network device connected to the downlink port has not accessed a network.

Specifically, in a process of accessing the network by the network device, an uplink port of the network device and a downlink port of the central equipment need to be enabled, a parameter of the uplink port of the network device and a parameter of the downlink port of the central equipment are configured, and the parameters of the two ports are made to match each other. After the uplink port of the network device and the downlink port of the central equipment are powered on, the two ports negotiate with each other. After the negotiation is completed, a network link is established between the uplink port of the network device and the downlink port of the central equipment. In this case, the central equipment changes a state of the downlink port, adjusts a state of the downlink port from a "down" state to an "up" state, and detects that the network device has accessed the network.

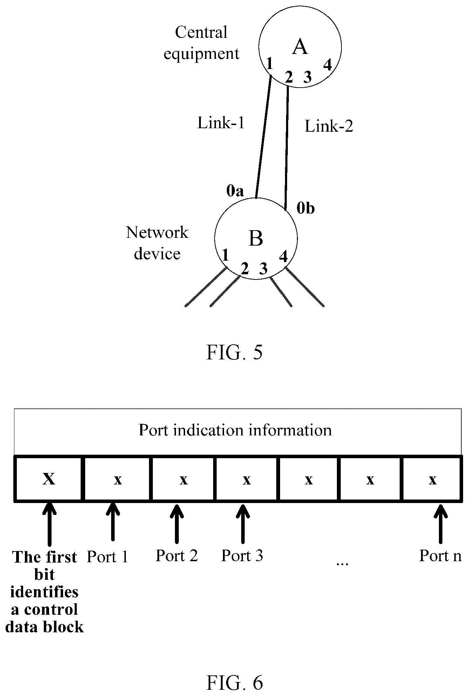

In an example scenario, in a network architecture shown in FIG. 5, central equipment A has four downlink ports: ports 1, 2, 3, and 4, a network device B has two uplink ports: ports 0a and 0b, and a network link between the downlink port 1 of the central equipment A and the uplink port 0a of the network device B is denoted as a link-1. After the downlink port 1 of the central equipment A and the uplink port 0a of the network device B are enabled and powered on, the downlink port 1 negotiates with the uplink port 0a. After the negotiation ends, a state of the downlink port 1 of the central equipment A is set to an "up" state, so that the central equipment A detects that the network device B has accessed a network.

This embodiment of this application provides a novel packet structure for a packet generated by the central equipment, where the novel packet structure mainly includes port indication information and a data block. Based on the packet structure, a packet may include port indication information and at least one data block. By using the designed packet structure, a severe limitation that a device sending/receiving a packet needs to be capable of supporting a layer 2 protocol and/or a layer 3 protocol is overcome, and the packet structure can be applicable to a device at a physical layer. In this way, the network device at the physical layer can identify and parse the packet, and therefore an application scope is greatly extended.

The following separately details (1) port indication information and (2) data block.

### (1) Port indication information

The following separately details port indication information from perspectives of a function, a location, content, a format, a generation process, and the like of the port indication information.

(1.1) Function of port indication information: The port indication information can replace a conventional layer 3 header (IP header) and layer 2 header (MAC header), may be used as new header information applicable to a physical layer, and may be a field in a packet. The port indication information is used to indicate a destination port of each data block, that is, can indicate a specific port, to which each data block in a packet is to be sent, of the network device. The network device can distinguish between data blocks on different destination ports by identifying the port indication information.

(1.2) Content of port indication information: In a possible implementation, the port indication information may include at least one port identifier, each port identifier is corresponding to one port of the network device, and each port identifier is used to identify whether at least one data block in a packet includes a data block whose corresponding port is a destination port.

From a perspective of a port corresponding to a port identifier, the network device may have two ports with different functions: a control port and a downlink port. Correspondingly, the port identifier may include a control port identifier and a downlink port identifier, where the control port identifier is corresponding to the control port of the network device, and the downlink port identifier is corresponding to the downlink port of the network device.

For example, FIG. 6 is a schematic diagram of port indication information according to an embodiment of this application. Each "X" in FIG. 6 represents a port identifier, and a value of "X" in a packet may be "1" or "0" actually. In the port indication information shown in FIG. 6, the first "X" is the first bit in the port indication information, and represents a control port identifier; and the second "X" to the last "X" are the second bit in the port indication information to the last bit in the port indication information, and represent downlink port identifiers. For example, the second "X" represents a downlink port identifier corresponding to a port 1, and the third "X" represents a downlink port identifier corresponding to a port 2.

A control port is also referred to as a console port, a management port, or a control management port, and is configured to transmit, to the network device, an instruction and/or a configured parameter for the network device. The control port may be a port logically, that is, a virtual port, and may be implemented by using software. For example, the control port may be a function module including a computer program. Optionally, the control port may be denoted as a port 0 of the network device.

In a packet provided in this embodiment, a destination port of a control data block may be the control port. In addition, the destination port of the control data block may alternatively be another port of the network device depending on an actual requirement. The control data block may be provided to serve as a control management packet, and the control data block carries the instruction and/or the configured parameter for the network device that are/is to be transmitted to the network device.

A control port identifier is used to indicate whether at least one data block includes a control data block, for example, may indicate whether a packet has a data block whose control port is the destination port. The network device may determine, by using the control port identifier, whether the at least one data block has a control data block, so that when the at least one data block has a control data block, the network device finds the control data block from the at least one data block, and then obtains the instruction and/or the parameter that are/is sent by the central equipment to the network device.

A downlink port is an input/output port of the network device, and is configured to send a packet to a next-level network device or a terminal. The downlink port may be a port physically, that is, a physical port; or the downlink port may be a port logically, that is, a virtual port. When the downlink port is a virtual port, the downlink port may be implemented by using software. For example, the downlink port may be a function module including a computer program. Optionally, a network device may have n downlink ports (where n is a positive integer). Different downlink ports can be connected to different next-level network devices, and the n downlink ports can be connected to n next-level network devices, where the n downlink ports may respectively be denoted as a port 1 to a port n in the network device.

A downlink port identifier is used to indicate whether at least one data block includes a downlink data block, for example, whether the at least one data block has a data block whose downlink port is the destination port. To differentiate descriptions, in this embodiment, the downlink data block carries data to be transmitted to another device. The another device may include a destination terminal and a next-level network device that is connected to the network device. The downlink data block is transmitted to the another device through the downlink port, and the downlink port identifier is used to identify whether the at least one data block in a packet has a downlink data block. The network device may determine, by using the downlink port identifier, whether the at least one data block has a downlink data block, so that when the at least one data block has a downlink data block, the network device finds the downlink data block from the at least one data block, and then transmits the downlink data block to the another device.

From a perspective of a value of a port identifier, the value of the port identifier may include a valid identifier and an invalid identifier. The valid identifier is used to indicate that at least one data block has a data block whose corresponding port is the destination port, and the invalid identifier is used to indicate that at least one data block does not have a data block with a corresponding port.

Specifically, when the at least one data block has a data block whose corresponding port is the destination port, the value of the port identifier is a valid identifier, so that when identifying that the port identifier is a valid identifier, the network device learns that the at least one data block has a data block whose corresponding port is the destination port. When the at least one data block does not have a data block whose corresponding port is the destination port, the value of the port identifier is an invalid identifier, so that when identifying that the port identifier is an invalid identifier, the network device learns that the at least one data block does not have a data block whose corresponding port is the destination port. In other words, different cases regarding whether the at least one data block has a data block whose corresponding port is the destination port can be differentiated by using the valid identifier and the invalid identifier.

The valid identifier may include a numeral, a letter, a character string, and another data type. For example, the valid identifier may include 1, Y, Yes, T, True, and the like. The invalid identifier may include a numeral, a letter, a character string, and another data type. For example, the invalid identifier may include 0, N, No, F, False, and the like.

That the valid identifier is 1 and the invalid identifier is 0 is used as an example. The control port identifier being 1 in the port indication information may indicate that a packet has a control data block, and the control port identifier being 0 in the port indication information may indicate that a packet does not have a control data block. Likewise, the downlink port identifier being 1 in the port indication information may indicate that a packet has a downlink data block, and the downlink port identifier being 0 in the port indication information may indicate that a packet does not have a downlink data block.

In a packet provided in this embodiment, the port indication information can indicate a destination port of a data block by carrying only each port identifier instead of carrying a MAC address and/or an IP address. Therefore, the network device is not required to be capable of supporting the layer 2 protocol and/or the layer 3 protocol. The network device can find from the packet the data block on each port by identifying the port indication information.

It should be noted that the foregoing uses an example for description in which the port indication information indicates the destination port of each data block by carrying only each port identifier. In another possible implementation, the port indication information may alternatively indicate the destination port of each data block in another manner. A specific manner used by the port indication information to indicate the destination port of the data block is not limited in this embodiment.

(1.3) Format of port indication information: Each port identifier in the port indication information occupies one bit. When a value of a port identifier is 1 or 0 in a binary system, and each port identifier occupies one bit (binary digit, bit for short below), if the port indication information has n port identifiers, the port indication information occupies n bits in total. In a possible design, the port indication information occupies approximately 56 bits in total.

The bit occupied by each port identifier in the port indication information may be specified in advance. In this embodiment, an example is used for description in which it is specified that a bit of a first preset location in the port indication information carries the control port identifier. The bit of the first preset location may be the first bit, or may be designed as being at another location depending on an actual requirement. The bit of the first preset location is designed as the first bit, the control port identifier is the first bit in the port indication information, and the control port is exactly a port 0 of the network device. In this case, a sequence of the control port identifier in the port indication information matches a sequence of the control port in ports of the network device.

The downlink port identifier may be carried in a bit other than the bit of the first preset location in the port indication information, for example, may be carried in any one of the second bit to the last bit in the port indication information. If the network device has a plurality of downlink ports, the port indication information may have bits corresponding to the plurality of downlink port identifiers, and a sorting sequence of the plurality of bits may match numbers of the downlink ports. For example, if the network device has n downlink ports, numbers of the n downlink ports are a port 1, a port 2, ...and a port n, respectively. Referring to FIG. 6, the port indication information has bits corresponding to n downlink port identifiers, and a sorting sequence of n bits is: a bit of the port 1, a bit of the port 2, ... and a bit of the port n.

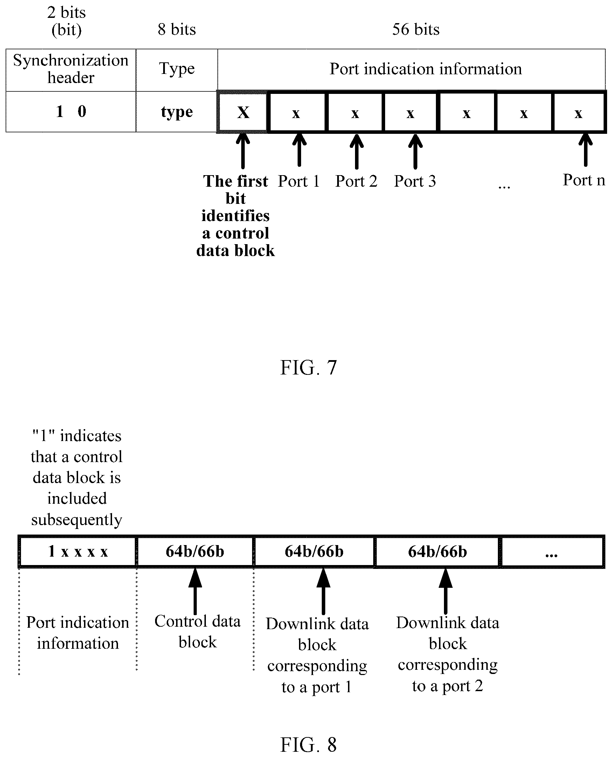

(1.4) Location of port indication information: The port indication information may be located in a header of a packet. In a possible implementation, the port indication information may be a first piece of information in the packet. For example, the port indication information may be located in the first bit to the 56^{th} bit in the packet. In another possible implementation, other information may be prior to the port indication information in the packet. For example, referring to FIG. 7, before the port indication information, the packet may further include other information such as a synchronization header and a type. The synchronization header occupies two bits, the type occupies eight bits, and the port indication information may be located in the 10^{th} bit to the 66^{th} bit in the packet.

(1.5) Generation process of port indication information: For each of a plurality of port identifiers in the port indication information, each time the central equipment generates the port indication information, the central equipment determines a value of the port identifier based on whether at least one data block has a data block whose corresponding port is the destination port. To be specific, when the at least one data block has a data block whose corresponding port is the destination port, it is determined that the value of the port identifier is a valid identifier; or when the at least one data block does not have a data block whose corresponding port is the destination port, it is determined that the value of the port identifier is an invalid identifier. After values of the plurality of port identifiers are obtained, the values of the plurality of port identifiers may form the port indication information.

In this embodiment, in a scenario in which a network device directly connected to the central equipment is discovered, to obtain the device information of the network device, the central equipment generates a control data block to be sent to the network device. Therefore, during generation of the port indication information, it is determined that a value of a control port identifier in the port indication information is a valid identifier. For example, 1 may be added to the first bit in the port indication information. In addition, for a value of a downlink port identifier, if the central equipment has a requirement for sending data to a downlink port of the network device, the value of the corresponding downlink port identifier in the port indication information may be a valid identifier. For example, 1 may be added to the second bit in the port indication information. If the central equipment has no requirement for sending data to a downlink port of the network device, the value of the corresponding downlink port identifier in the port indication information may be an invalid identifier.

With reference to the foregoing (1.1) to (1.5), in this embodiment of this application, by providing the port indication information, at least the following technical effects can be achieved:

First, a function of indicating a destination port of each data block is implemented. A port to which each data block is to be sent can be accurately identified by using each port identifier. The network device can learn, based on each port identifier, whether a packet has a data block on the corresponding port, to find, from the packet, the data block on the corresponding port.

Second, the port indication information can be identified by a network device at a physical layer. The port indication information does not need to carry an IP address and a MAC address. Therefore, the network device can identify the port indication information without a need to be capable of supporting the layer 2 protocol and the layer 3 protocol, and determine the destination port of each data block. In this way, an application scope is extended, and flexibility is desirable.

Third, a data volume is small. Each port identifier in the port indication information needs to occupy only one bit. When the central equipment needs to send a data block to a port of the network device, the central equipment only needs to add 1 to a bit corresponding to the port, so as to indicate that the at least one data block has a data block whose corresponding port is the destination port. When the central equipment does not need to send a data block to a port of the network device, the central equipment only needs to add 0 to a bit corresponding to the port, so as to indicate that the at least one data block does not have a data block whose corresponding port is the destination port. In this way, a total data volume of the port indication information is quite small, thereby reducing used transmission resources.

(2) A data block (bit block) is a code block that is formed after a segment of data is encoded. In a packet structure provided in this embodiment, a data part of a packet is divided into at least one data block. The data block may carry an instruction to be sent to the network device, for example, a device information sending instruction. Alternatively, the data block may carry information used to perform configuration on the network device, for example, a port mapping relationship. Alternatively, the data block may be used as a data packet, and carry data that needs to be transmitted, for example, data generated by a source terminal. All data in the packet is encoded in a unit of a block based on corresponding destination ports. Destination ports of data in one data block are the same, and data whose destination ports are different is in different data blocks. If data needs to be sent to a plurality of destination ports at a time, there are a plurality of data blocks in one packet. For example, if data needs to be sent to a control port and a downlink port 1 of the network device, the packet has a control data block and a downlink data block on the downlink port 1.

For a data block type, each data block is corresponding to one port of the network device, and the data blocks include a control data block and a downlink data block based on a corresponding port type. A destination port of the control data block is the control port of the network device, and the control data block is used to send, to the network device, an instruction or a configured parameter for the network device. A destination port of the downlink data block is the downlink port of the network device, and the downlink data block is used to send data to another device through the downlink port of the network device.

With respect to a control data block, the control data block carries the instruction or the configured parameter, and a location of the control data block in at least one data block in a packet may be specified in advance. In this embodiment, the location of the control data block is referred to as a second preset location. A bit of the second preset location may be the first bit, or may be designed as being at another location depending on an actual requirement. The central equipment may arrange the control data block at the second preset location in the at least one data block. The bit of the second preset location may be designed as the first bit. After identifying port indication information, the network device finds the first data block after the port indication information, that is, obtains the control data block.

With respect to a downlink data block, the downlink data block carries data that needs to be transmitted by the network device in a downlink through a downlink port. For example, when the downlink port of the network device is connected to a next-level network device, the downlink data block may carry an instruction or a configured parameter that is to be sent to the next-level network device. For another example, when the downlink port of the network device is connected to a terminal, the downlink data block may carry data to be sent to the terminal. In this way, during network topology construction, the device information sending instruction may be added to the downlink data block, to instruct the next-level network device to report device information. During delivery of the network topology, the port mapping relationship may be added to the downlink data block, to instruct the next-level network device to store and use the port mapping relationship. During data transmission, user data may be added to the downlink data block, to transmit the user data to the terminal.

A location of the downlink data block in at least one data block in a packet may be predetermined. If a data block needs to be sent in a downlink through a plurality of downlink ports of the network device, the packet may have a plurality of downlink data blocks, and a sorting sequence of the plurality of downlink data blocks may match a sorting sequence of the downlink ports. For example, if data needs to be transmitted in a downlink through a port 1 to a port n of the network device, a downlink data block on the port 1 to a downlink data block on the port n are successively sorted in the packet.

For an encoding manner of a data block, in a possible implementation, each data block may be encoded in a 64b/66b manner. Specifically, each data block has 66 bits. The first two bits are a preamble part, and may be used for data alignment and bit stream synchronization at a receive end; and the other 64 bits are a data part carrying an instruction or data.

For example, FIG. 8 is a schematic diagram of a packet according to an embodiment of this application. The packet has a plurality of data blocks. The first data block is corresponding to a control port of the network device and is a control data block; the second data block is corresponding to a port 1 of the network device and is a downlink data block on the port 1; the third data block is corresponding to a port 2 of the network device and is a downlink data block on the port 2; and so on.

Optionally, the at least one data block in the packet may be successively sorted according to a plurality of periods, and there is at least one data block in each period. In one period, destination ports of different data blocks are different, and a data block is in a one-to-one correspondence with a port. Specifically, the following two cases are included.

Case 1: Data blocks corresponding to all ports may be included in one period. For example, the network device has a control port, a port 1, and a port 2. In this case, there are three data blocks in the packet in the period: a control data block, a downlink data block on the port 1, and a downlink data block 2 on the port 2.

Case 2: Data blocks corresponding to some ports may be included in one period. For example, the network device has a control port, a port 1, and a port 2. If only an instruction or configuration information needs to be sent to the network device, and data does not need to be transmitted by the network device in a downlink, there is one data block in the packet in the period: a control data block. For another example, the network device has a control port, a port 1, and a port 2. If only data needs to be transmitted by the network device in a downlink through the port 1 and the port 2, and an instruction or configuration information does not need to be sent to the network device, there are two data blocks in the packet in the period: a downlink data block on the port 1 and a downlink data block 2 on the port 2.

In other words, whether the packet in one period has a data block corresponding to any port can be flexibly determined depending on a requirement. The packet in the period may include data blocks corresponding to all ports, or data blocks corresponding to some ports by default. This is not limited in this embodiment.

Sorting rules of data blocks in different periods are the same. Destination ports of data blocks at a same location in a plurality of periods are the same. For example, the first data block in each period is a control data block, and the second data block in each period is a downlink data block on the port 1. In other words, for a data block corresponding to any port, if the data block is at a location i (where i is a positive integer) in the first period, the data block is also at the location i in the second period, the third period, ... and the last period.

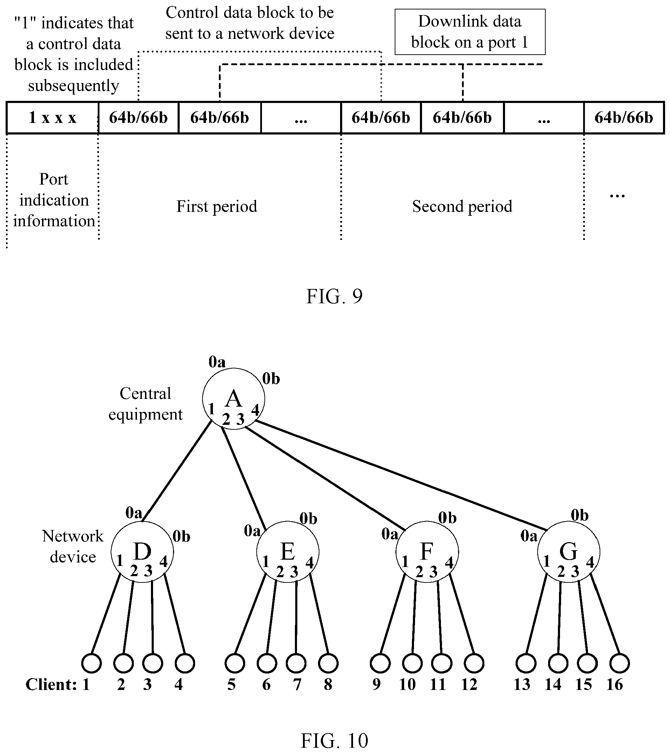

For example, FIG. 9 is a schematic diagram of a packet according to an embodiment of this application. Data blocks in the packet are sorted in two periods. In the first period, the first data block is a control data block, and the second data block is a downlink data block on a port 1; and in the second period, the first data block is a control data block, and the second data block is a downlink data block on the port 1. It can be learnt that a sorting rule of data blocks in the first period is the same as that of data blocks in the second period.

By designing a format of the plurality of periods, a limitation on a capacity of a single data block can be overcome, and packet extensibility is improved. Each 64b/66b data block carries a maximum of 64-bit data, and a single data block usually cannot satisfy a requirement for accommodating all data. In this embodiment, if the central equipment needs to send a large amount of data to a port of the network device, the central equipment may generate a plurality of data blocks for the port, pad the plurality of data blocks with all the data, and sort the plurality of data blocks in the plurality of periods. A packet capacity can be significantly increased while it is ensured that data blocks are sorted in order in each period. In addition, a quantity of periods for each packet can be determined depending on a requirement. If a volume of data that needs to be carried is relatively small, there may be a relatively small quantity of periods for data blocks, and therefore a length of the packet is relatively short. If a volume of data that needs to be carried is relatively large, there may be a relatively large quantity of periods for data blocks, and therefore a length of the packet is relatively long. It can be learnt that the length of the packet can be flexibly adjusted depending on a requirement, and extensibility and flexibility are relatively desirable.

For data block content, in this step, to obtain the device information of the network device, the central equipment may obtain the device information sending instruction, and adds the device information sending instruction to a control data block in at least one data block, so that the network device sends the device information of the network device according to the device information sending instruction.

The device information sending instruction is used to obtain the device information of the network device, and can instruct the network device to send the device information. The device information sending instruction may be an instruction in a simple network management protocol (Simple Network Management Protocol, SNMP for short below), an instruction in a link layer discovery protocol (Link Layer Discovery Protocol, LLDP for short below), an instruction in a network configuration (Network Configuration, NETCONF for short below) protocol, or another instruction that can instruct a device to report information. For example, the device information sending instruction may be a "get" instruction in the SNMP.

With respect to a process of adding the device information sending instruction to the control data block, in a possible implementation, the central equipment may first generate a plurality of blank data blocks; determine a blank data block, arranged at the second preset location, among the blank data blocks; use the blank data block as a to-be-padded control data block; and perform a data write operation on the to-be-padded control data block, to write a device information sending instruction. In this way, the control data block carries the device information sending instruction. The blank data block is a data block that is not padded with data, and may include a large quantity of zeros or other default data.

Optionally, based on a plurality of periods corresponding to data blocks, the central equipment may determine a to-be-padded control data block in each period; and perform a data write operation successively on the plurality of to-be-padded control data blocks, to write a device information sending instruction. In this way, a plurality of padded control data blocks carry the complete device information sending instruction after being combined.

In summary, the foregoing separately describes (1) port indication information and (2) data block. The central equipment may first generate the port indication information and the at least one data block, and then encapsulate the port indication information and the at least one data block to obtain a packet. In the encapsulated packet, the port indication information may be located in a header, and the at least one data block may be located after the port indication information.

402. The central equipment sends the packet to the network device.

The central equipment may determine a downlink port connected to the network device, and send the packet through the downlink port. The packet is transmitted from the downlink port of the central equipment to an uplink port of the network device over a network link, so that the uplink port of the network device receives the packet.

Optionally, in step 401, if a trigger occasion for generating a packet by the central equipment is detecting that the network device has accessed the network, the central equipment may determine a downlink port whose state has been changed, that is, a downlink port whose state has been set to an "up" state; and use the downlink port as a downlink port for sending the packet.

In an example scenario, referring to FIG. 5, if the network device B enables the uplink port 0a to access the network and the state of the downlink port 1 of the central equipment is adjusted from a "down" state to an "up" state, in this step, the central equipment sends a packet through the downlink port 1, so that the packet arrives at the uplink port 0a of the network device B through the downlink port 1. If the network device B enables the uplink port 0b to access the network, and a state of the downlink port 2 of the central equipment is adjusted from a "down" state to an "up" state, in this step, the central equipment sends a packet through the downlink port 2, so that the packet arrives at the network device B through the downlink port 2.

403. The network device receives the packet, and determines a control data block in the at least one data block based on the port indication information.

With respect to a specific process of determining the port indication information in the packet, the network device may obtain a location of the port indication information; and determine the port indication information based on the location of the port indication information, to identify the port indication information in the packet. For example, it may be specified in advance that the port indication information is located in the 10^{th} bit to the 66^{th} bit in the packet, and in this case, the network device may determine the 10^{th} bit to the 66^{th} bit in the packet, and read the 10^{th} bit to the 66^{th} bit in the packet, to obtain the port indication information.

With respect to a specific process of determining the control data block, in a possible implementation, the network device may determine the control data block in the packet in the following step 1 to step 3.

Step 1: The network device identifies a control port identifier in the port indication information.

The network device may prestore a location of the control port identifier, that is, the first preset location; and the network device may parse a bit of the first preset location in the port indication information to obtain the control port identifier carried in the bit. That the bit of the first preset location is the first bit is used as an example. The network device may identify the first bit in the port indication information to obtain the control port identifier carried in the first bit.

Step 2: The network device determines whether the control port identifier is a valid identifier.

When the control port identifier is a valid identifier, it indicates that the at least one data block includes a data block whose destination port is a control port, and then the network device performs step 3. When the control port identifier is an invalid identifier, it indicates that the at least one data block does not include a data block whose destination port is a control port, and then the network device does not need to perform step 3.

That the valid identifier is 1 and the invalid identifier is 0 is used as an example. The network device may determine whether the control port identifier is 1; and when the control port identifier is 1, perform step 3.

Step 3: The network device determines the control data block from the at least one data block.

The network device may obtain a location of the control data block in the at least one data block, that is, the second preset location; identify a data block at the second preset location in the at least one data block; and use the data block at the second preset location as the control data block. That the bit of the second preset location is the first bit is used as an example. The network device may identify the first data block in the at least one data block, and use the first data block as the control data block.

Optionally, if the data blocks in the packet are successively sorted according to a plurality of periods, the network device may determine a data block at the second preset location in each period to obtain a plurality of data blocks; and use all the plurality of data blocks as control data blocks.

404. The network device parses the control data block to obtain a device information sending instruction, and sends device information to the central equipment according to the device information sending instruction.

In step 401, the central equipment adds the device information sending instruction to the control data block. Therefore, in this step, the network device may parse the control data block to obtain the device information sending instruction carried in the control data block; and the network device may learn, according to the device information sending instruction, that the central equipment instructs the network device to report the device information. In this case, in response to the device information sending instruction, the network device obtains the device information of the network device, and sends the device information of the network device to the central equipment, so that the central equipment generates a network topology based on the device information of the network device.

The device information of the network device is used by the central equipment to generate the network topology. The device information of the network device may include an identifier of the network device and port information of the network device. The identifier of the network device is used to identify the corresponding network device, and may be a number, a name, or the like of the network device. The port information of the network device may include uplink port information and/or downlink port information of the network device. The port information of the network device may include a quantity of ports, a port identifier, whether a port is in an "up" state, a port type, a traffic shaping rate of a port, a simplex/duplex mode of a port, a link type of a port, a network cable type of a port, and the like. The port identifier is used to identify a corresponding port, and may be a number, a name, or the like of the port. The simplex/duplex mode of a port may include a simplex/duplex mode, a full-duplex mode, auto-negotiation, and the like.

With respect to a specific process of sending the device information by the network device, in a possible implementation, the network device may generate a packet by using a novel packet format provided in this embodiment of this application; and add the device information of the network device to the packet and then send the packet, so as to send the device information.

For a specific implementation of generating the packet by the network device, a process of generating the packet by the network device may be considered as a reverse process of generating the packet by the central equipment. The network device may generate the packet by using the control port. The packet includes port indication information and a control data block, and the control data block carries the device information. In a possible implementation, the network device may first generate the port indication information and the control data block; add the device information to the control data block; and encapsulate the port indication information and the control data block to obtain the packet.

The port indication information in the packet generated by the network device is similar to the port indication information generated by the central equipment in the foregoing description. A difference lies in that, the packet generated by the central equipment is transmitted in a downlink to the network device, and the port indication information generated by the central equipment is used by the network device for identification. Therefore, the port indication information generated by the central equipment is used to indicate a destination port of each data block, so that the data block is transmitted in a downlink to the corresponding destination port. The packet generated by the network device is transmitted in an uplink to the central equipment, and the port indication information generated by the network device is used by the central equipment for identification. Therefore, the port indication information generated by the network device is used to indicate a source port of each data block, for example, indicate that a source port of the control data block is the control port, so that the central equipment is informed of a specific port, from which each data block comes, of the network device by using a function of indicating a source port.

In this step, the source port of the control data block is the control port of the network device. Therefore, during generation of the port indication information, the network device sets a control port identifier in the port indication information as a valid identifier, for example, adds 1 to the first bit in the port indication information. That the packet has a control data block that comes from the control port can be indicated by using the control port identifier, so that the central equipment determines, based on the control port identifier in the port indication information, that the packet has a control data block that comes from the control port.

With respect to a specific process of sending the packet by the network device to the central equipment, the network device may determine an uplink port through which the packet carrying the device information sending instruction is received in step 405, and send, through the uplink port, the packet encapsulated by the network device. In this case, the packet is transmitted to the downlink port of the central equipment over a network link between the downlink port of the central equipment and the uplink port, so that the downlink port of the central equipment receives the packet.

In an example scenario, referring to FIG. 5, if the network device B receives, in step 405 through the uplink port 0a, the packet carrying the device information sending instruction, the network device B sends, to the central equipment through the uplink port 0a in this step, the packet carrying the device information. In this case, the packet passes through the network link between the uplink port 0a and the downlink port 1, and then arrives at the downlink port 1 of the central equipment A.

With reference to a process for downlink transmission of a packet carrying a device obtaining instruction and a process for uplink transmission of a packet carrying device information, it can be learnt that the packet carrying the device information returns along a downlink transmission path of the packet carrying the device obtaining instruction, to implement uplink transmission. Therefore, from a perspective of the network device, the network device only needs to determine a specific uplink port through which the packet carrying the device information sending instruction is received, without awareness of an IP address and a MAC address of the central equipment; and sends, through the uplink port, the packet carrying the device information, so as to implement uplink transmission to the central equipment. The packet carrying the device information automatically returns to the central equipment along a path between the uplink port and a downlink port.

In this embodiment, during uplink packet sending, the network device only needs to be aware of a port inside the network device, without awareness of the IP address or the MAC address of the central equipment and without adding the IP address or the MAC address of the central equipment to the packet. This overcomes a limitation that a higher layer protocol can be supported and a header of the higher layer protocol can be encapsulated. In this way, an application scope is greatly extended, and flexibility is improved. In addition, compared with a complex manner in which a conventional switch sends a packet through MAC aggregation, the network device sends the device information in the packet format provided in this embodiment of this application, and therefore the operation is simple. This greatly reduces complexity, and reduces running power consumption.

405. The central equipment receives the device information.

The central equipment may receive the device information sent by the network device, so as to generate the network topology based on the device information. With reference to a manner of generating and sending the packet by the network device in step 404, the central equipment may receive the packet from the network device; determine the port indication information in the packet; determine, based on the port indication information, a data block whose source port is the control port in the packet, to obtain the control data block; and parse the control data block to obtain the device information carried in the control data block.

With respect to a specific process of receiving the packet by the central equipment, after the network device sends the packet through the uplink port, the packet is transmitted to the downlink port of the central equipment over the network link between the central equipment and the uplink port of the network device, and then the downlink port of the central equipment receives the packet.

For a specific implementation of determining the control data block by the central equipment, in a possible implementation, similar to the process of determining the control data block by the network device in step 403, the central equipment may determine the control data block in the packet in the following step 1 to step 3.

Step 1: The central equipment determines the control port identifier in the port indication information.

For example, the central equipment may determine a bit of the first preset location in the port indication information to obtain the control port identifier carried in the bit. That the bit of the first preset location is the first bit is used as an example. The central equipment may determine the first bit in the port indication information to obtain the control port identifier carried in the first bit.

Step 2: The central equipment determines whether the control port identifier is a valid identifier.

When the control port identifier is a valid identifier, it indicates that at least one data block in the packet has a data block whose source port is the control port, and then the central equipment performs step 3. When the control port identifier is an invalid identifier, it indicates that at least one data block in the packet does not have a data block whose source port is the control port, and then the central equipment does not need to perform step 3.

That the valid identifier is 1 and the invalid identifier is 0 is used as an example. The central equipment may determine whether the control port identifier is 1; and when the control port identifier is 1, perform step 3.

Step 3: The central equipment determines the control data block from the at least one data block.

The central equipment may obtain a location of the control data block in the at least one data block, that is, the second preset location; determine a data block at the second preset location in the at least one data block; and use the data block at the second preset location as the control data block. That the bit of the second preset location is the first bit is used as an example. The central equipment may determine the first data block in the at least one data block, and use the first data block as the control data block.

Optionally, if the data blocks in the packet are successively sorted according to a plurality of periods, the central equipment may determine a data block at the second preset location in each period to obtain a plurality of data blocks; and use all the plurality of data blocks as control data blocks.

In summary, by using step 401 to step 405, the central equipment obtains device information of a network device, so as to complete discovery of the network device. Optionally, the central equipment may perform step 401 to step 405 for a plurality of times, and obtains device information of a plurality of network devices, so as to complete discovery of all the network devices.

In an example scenario, in networking shown in FIG. 10, a downlink port 1 of central equipment A is connected to an uplink port 0a of a network device D, a downlink port 2 of the central equipment A is connected to an uplink port 0a of a network device E, a downlink port 3 of the central equipment A is connected to an uplink port 0a of a network device F, and a downlink port 4 of the central equipment A is connected to an uplink port 0a of a network device E. After the downlink port 1 of the central equipment A sends a packet to the uplink port 0a of the network device D, the uplink port 0a of the network device D returns device information, so that the central equipment A obtains the device information of the network device D. Likewise, after the downlink port 2 of the central equipment A sends a packet to the uplink port 0a of the network device E, the uplink port 0a of the network device E returns device information, so that the central equipment A obtains the device information of the network device E. The rest may be deduced by analogy. Finally, the central equipment obtains device information of all the first-level network devices: the network device D, the network device E, the network device F, and a network device G. In other words, the central equipment can obtain the device information of all the first-level network devices by sending the packets through all the downlink ports.

In this embodiment, data in the packet is encoded in a unit of a block based on different destination ports, and a destination port of each data block is indicated by using the port indication information. In a network initialization scenario, a technical issue of obtaining device information of a network device under a condition that an identifier of the network device is unknown is resolved.

Specifically, from a perspective of the central equipment, during network initialization, a specific uplink port, to which the downlink port of the central equipment is connected, of the network device is unknown to the central equipment. In this embodiment, when any uplink port of the network device accesses a network, the central equipment may uniformly instruct the network device to report the device information in the foregoing manner, without awareness of the specific uplink port, to which the downlink port of the central equipment is connected, of the network device. For example, referring to FIG. 5, when the downlink port 1 of the central equipment A is in an "up" state, the central equipment A only needs to generate a packet, without learning whether the downlink port 1 is connected to the uplink port 0a of the network device B or the uplink port 0b of the network device B; sets a control port identifier in port indication information in the packet as a valid identifier; adds a device information sending instruction to a control data block in the packet; and sends the packet through the downlink port 1.

406. The central equipment generates the network topology based on the device information.

The network topology (Network Topology) includes device information of a plurality of network devices. The network topology may be represented in a form of a list, graphics, or another data structure, and can reflect a sorting manner between devices on a network physically or logically.

In this embodiment, each time the central equipment obtains device information of a network device, the central equipment may determine the network device and a port of the network device based on the device information, to discover the network device directly connected to the central equipment. The rest may be deduced by analogy. All network devices directly connected to the central equipment can be discovered by using device information of all the network devices directly connected to the central equipment. A network topology can be generated based on the device information of all the discovered network devices.

In the method provided in this embodiment, a novel packet encoding structure is designed. Data in the packet is encoded in a unit of a block based on destination ports, and a destination port of the control data block is indicated by using the port indication information. The central equipment generates a packet in such a packet encoding structure, and sends the packet to the network device. Then, the network device can find the control data block from the packet based on the port indication information in the packet, and obtain the device information sending instruction in the control data block, so as to report the device information to the central equipment. In this embodiment, the network device does not need to identify a protocol of a data link layer, and therefore a limitation that the network device can be discovered only when the protocol of the data link layer is used is overcome. In addition, the network device does not need to identify a protocol of a network layer, and therefore a limitation that the network device can be discovered only when the protocol of the network layer is used is overcome. This can be applied to a network device operating at a physical layer. In this way, an application scope is greatly extended, and flexibility is improved.

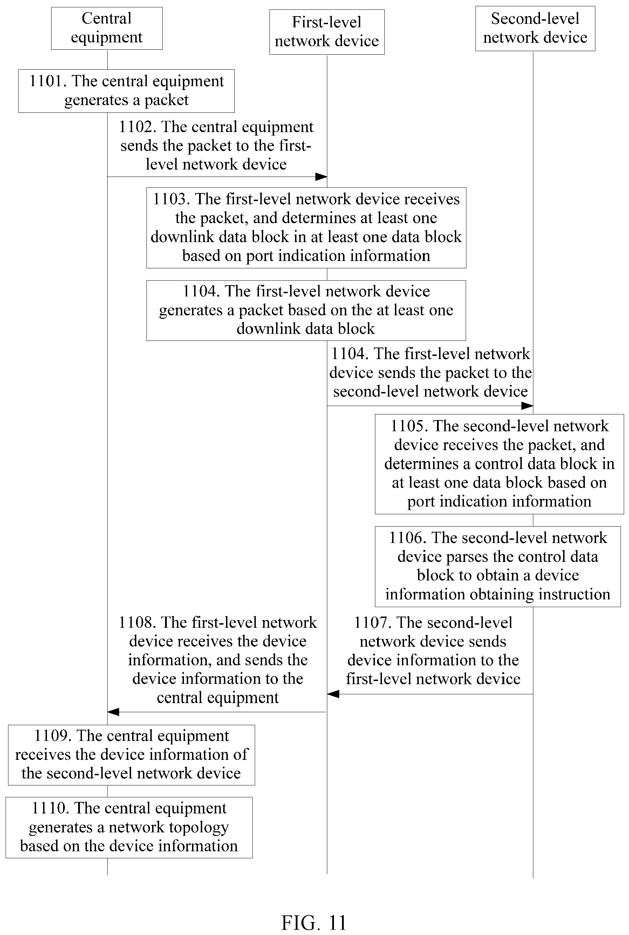

The process of discovering, by the central equipment, the network device directly connected to the central equipment is described in the embodiment in FIG. 4. In an embodiment of this application, central equipment can implement level-by-level discovery of a network device of each level, to obtain device information of the network device of each level, thereby implementing multi-level network topology construction. The following provides detailed descriptions with reference to the embodiment in FIG. 11.

For ease of description, an example in which two-level network devices are discovered is used for description in the embodiment in FIG. 11. In a possible implementation, a same process may be used to discover network devices of three or more levels and construct a network topology with three or more levels. A quantity of levels deployed for the network devices and a quantity of levels of the constructed network topology are not limited in this application.

FIG. 11 is a flowchart of a network topology generation method according to an embodiment of this application. Interaction entities in the method include central equipment, a first-level network device, and a second-level network device. The method can be applied to the implementation environment shown in FIG. 1, and the method includes the following steps.

1101. The central equipment generates a packet.

With respect to an occasion for generating a packet by the central equipment, in a possible implementation, when the second-level network device accesses a network, the central equipment can detect that the second-level network device has accessed the network, and then a packet is generated. Certainly, the central equipment may alternatively generate a packet on other occasions. For examples of the other occasions, refer to step 401. Details are not described herein again.

For a specific implementation of detecting whether the second-level network device has accessed the network, when the second-level network device has accessed the network, the first-level network device can detect that the second-level network device has accessed the network, and the first-level network device may notify the central equipment that the second-level network device has accessed the network. The central equipment can detect that the second-level network device has accessed the network, by using the notification of the first-level network device.

For a specific implementation of detecting, by the first-level network device, whether the second-level network device has accessed the network, similar to the implementation of detecting, by the central equipment, whether the first-level network device has accessed the network in step 401, the first-level network device may determine a state of each downlink port. When any downlink port is in an "up" state, the first-level network device may determine that a second-level network device connected to the downlink port has accessed a network; or when any downlink port is in a "down" state, the first-level network device may determine that a second-level network device connected to the downlink port has not accessed a network.

Specifically, in a process of accessing the network by the second-level network device, an uplink port of the second-level network device and a downlink port of the first-level network device need to be enabled, a parameter of the uplink port of the second-level network device and a parameter of the downlink port of the first-level network device are configured, and the parameters of the two ports are made to match each other. Then, the uplink port of the second-level network device and the downlink port of the first-level network device negotiate with each other. After the negotiation is completed, a network link is established between the uplink port of the second-level network device and the downlink port of the first-level network device. In this case, the first-level network device changes a state of the downlink port, adjusts the state of the downlink port from a "down" state to an "up" state, and detects that the second-level network device has accessed the network.

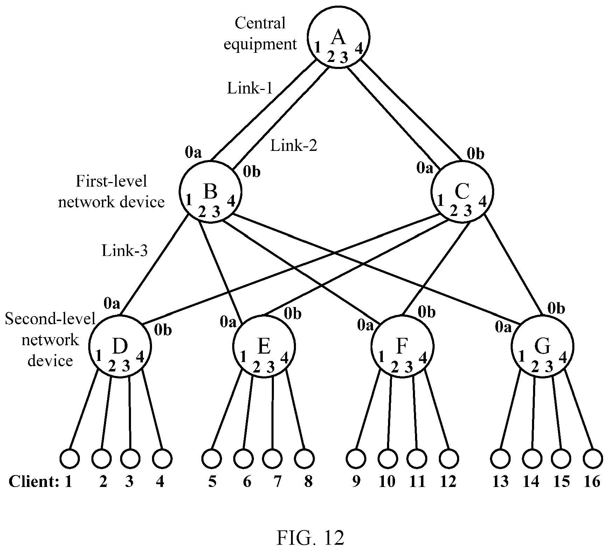

In an example scenario, in a network architecture shown in FIG. 12, a first-level network device B has four downlink ports: ports 1, 2, 3, and 4, a second-level network device D has two uplink ports: ports 0a and 0b, and a network link between the downlink port 1 of the first-level network device B and the uplink port 0a of the second-level network device D is denoted as a link-3. After the downlink port 1 of the first-level network device B and the uplink port 0a of the second-level network device D are enabled and complete negotiation, a state of the downlink port 1 of the first-level network device B is set to an "up" state, and the downlink port 1 of the first-level network device B reports that the link-3 is valid, so that the first-level network device B can detect that the second-level network device D has accessed a network.

For a specific implementation of notifying, by the first-level network device, the central equipment, the first-level network device may generate a notification message, and send the notification message to the central equipment; and the central equipment may receive the notification message, and determine, based on the notification message, that the second-level network device has accessed the network. The notification message is used to indicate that the second-level network device has accessed the network, and the notification message may be generated by using a control port of the first-level network device. The notification message may be recorded as a port status change message in a program, and the notification message may carry an identifier of the downlink port whose state has been set to an "up" state. The notification message can indicate, by using the identifier of the downlink port, the downlink port whose state has been changed in the first-level network device. The notification message may be sent through an uplink port of a first network device, pass through a network link between a downlink port of the central equipment and the uplink port, and then arrive at the downlink port of the central equipment.

In an example scenario, referring to FIG. 12, after detecting that the second-level network device D has accessed the network, the first-level network device B may generate a notification message by using a control port, and send the notification message through an uplink port 0a. In this case, a downlink port 1 of the central equipment receives the notification message. The notification message may carry an identifier of the port 1 of the first-level network device B, which may be recorded as a port status change message of the port 1.

With respect to a packet generated by the central equipment in a multi-level networking architecture, the packet includes port indication information and at least one data block. The at least one data block includes at least one downlink data block whose destination port is a downlink port of the network device, the at least one downlink data block carries port indication information and a control data block that are to be sent to a next-level network device of the network device, and the control data block carries a device information sending instruction. Two-level networking provided in this embodiment is used as an example. At least one data block in a packet includes at least one downlink data block whose destination port is a downlink port of the first-level network device, and the at least one downlink data block carries port indication information and a control data block that are to be sent to the second-level network device.

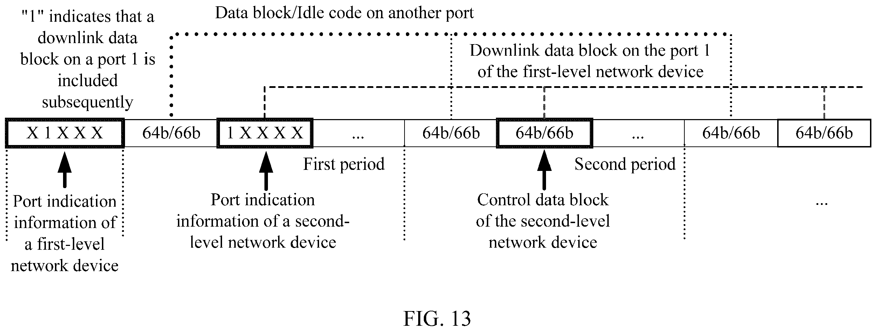

For example, FIG. 13 shows fields to which three arrows point. A field to which the first arrow points, that is, a field including "X1XXX", is port indication information to be sent to a first-level network device. "1" is the second bit in "X1XXX", and is corresponding to a downlink port 1 of the first-level network device. "1" indicates that a subsequent packet includes a downlink data block whose destination port is the downlink port 1.

A field to which the second arrow points, that is, a field including " 1XXXX", is both the downlink data block on the downlink port 1 of the first-level network device and port indication information to be sent to a second-level network device. "1" is the first bit in "1XXXX", and is a control port identifier of the second-level network device. "1" indicates that a subsequent packet includes a control data block.

A field to which the third arrow points is the control data block of the second-level network device. In this step, the control data block carries a device information sending instruction to be sent to the second-level network device. In a subsequent process of delivering a port mapping relationship, the control data block carries a port mapping relationship to be sent to the second-level network device.

To be specific, the packet in FIG. 12 includes two pieces of port indication information, where one piece of port indication information is the port indication information to be sent to the first-level network device; the other piece of port indication information is the port indication information to be sent to the second-level network device, and is also the downlink data block that is transmitted in a downlink by the downlink port 1 of the first-level network device.

It can be learnt from the foregoing example that, the packet provided in this embodiment can be understood as being in a hierarchical structure, and a packet sent to each network device may serve as one layer of a packet generated by a core network device. Specifically, each layer includes at least port indication information to be sent to a network device. Optionally, if an instruction or a configured parameter needs to be sent to a network device of any level, each layer may further include a control data block to be sent to the network device.

By using the hierarchical structure of the packet, the packet is stripped layer-by-layer during downlink transmission, so that downlink transmission is performed level by level. Specifically, each time one network device is passed through, one layer of the packet is stripped. In other words, each time when one network device receives the packet, the network device removes port indication information, sent to the network device, in the packet; if a control port identifier in the port indication information is valid, further removes a control data block, sent to the network device, in the packet; and sends a remaining part of the packet, that is, at least one downlink data block, to a next-level network device through a downlink port. The next-level network device removes port indication information and a control data block likewise. In this case, after the packet arrives at a last-level network device, the packet obtained by the last-level network device is in a single-layer structure through layer-by-layer stripping, and the packet includes port indication information and a control data block that are to be sent to the last-level network device.

Optionally, a sorting sequence of a plurality of layers of the packet may match a sequence of levels of network devices in a network architecture. For example, if the network architecture respectively includes a first-level network device, a second-level network device, ... and a last-level network device from top to bottom, for the plurality of layers in the packet, the outermost layer includes the port indication information to be sent to the first-level network device, the second outermost layer includes the port indication information to be sent to the second-level network device, and the innermost layer includes the port indication information to be sent to the last-level network device.

Based on the two-level networking architecture in this embodiment, a packet includes two layers. An outer-layer packet includes port indication information to be sent to the first-level network device, and an inner-layer packet can be understood as playing two roles. On one hand, the inner-layer packet may be considered as a data packet that needs to be transparently transmitted in a downlink by the first-level network device, and the inner-layer packet includes at least one downlink data block to be sent to the first-level network device. On the other hand, the inner-layer packet may also be considered as a control packet that needs to be received and processed by the second-level network device, and the inner-layer packet includes port indication information and a control data block that are to be sent to the second-level network device.

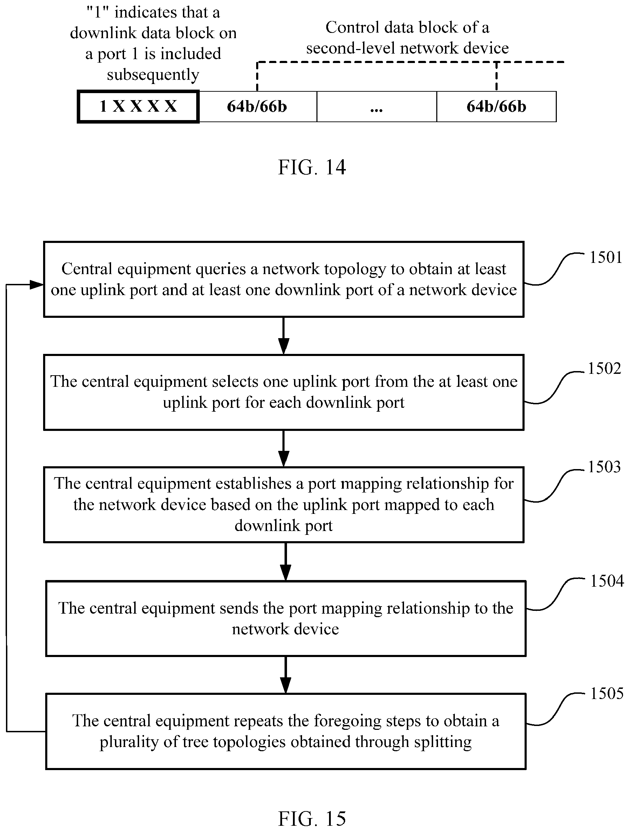

For example, referring to FIG. 13 and FIG. 14, the packet shown in FIG. 13 is the packet generated by the central equipment, that is, a packet received by the first-level network device; and a packet shown in FIG. 14 is a packet received by the second-level network device. It can be learnt from FIG. 13 and FIG. 14 that, the packet shown in FIG. 14 includes a data block included in the packet shown in FIG. 13, and may be considered as a packet obtained by splitting the packet shown in FIG. 13.

For the port indication information included in the outer-layer packet, that is, the port indication information to be sent to the first-level network device, because the packet has the downlink data block to be sent to the first-level network device, the central equipment determines a downlink port, connected to the second-level network device, of the first-level network device; and sets a downlink port identifier of the downlink port in the port indication information as a valid identifier. For example, if a downlink data block needs to be sent by the first-level network device B to the second-level network device D through the downlink port 1 of the first-level network device B, and a downlink port identifier of the downlink port 1 is the second bit in the port indication information, the central equipment adds 1 to the second bit in the port indication information. Then, the first-level network device can find the downlink data block from the packet based on the port indication information; encapsulates the downlink data block to obtain a packet; and sends the packet to the second-level network device.

For the port indication information included in the inner-layer packet, that is, the port indication information to be sent to the second-level network device, the central equipment sets a control port identifier in the port indication information as a valid identifier, for example, adds 1 to the first bit in the port indication information. Then, the second-level network device may determine, based on the port indication information, that the packet includes the control data block; find the control data block from the at least one data block in the packet; obtain a device information sending instruction from the control data block; and proactively report device information to the central equipment.

For example, referring to FIG. 13, the port indication information at the outer layer in the packet is "X1XXX" and the second bit is 1, and therefore it indicates that the packet includes the downlink data block on the port 1; the port indication information at the inner layer is "1XXXX" and the first bit is 1, and therefore it indicates that the packet includes the control data block to be sent to the second-level network device.

In summary, in this step, the packet generated by the core network device may be considered as a combination of two packets, and includes the packet to be sent to the first-level network device and the packet to be sent to the second-level network device. By using the packet format provided in this embodiment, the core network device can perform downlink transmission on the packet level by level, without adding an IP address of the first-level network device and/or an IP address of the second-level network device to the packet, adding a MAC address of the first-level network device and/or a MAC address of the second-level network device to the packet, and adding a preset MAC address or IP address to the packet, for example, without adding a multicast address specified by the STP protocol. In this way, an application scope is greatly extended.

1102. The central equipment sends the packet to the first-level network device.

The central equipment may determine a downlink port connected to the first-level network device, and send the packet through the downlink port. The packet is transmitted from the downlink port to an uplink port of the first-level network device over a network link, so that the uplink port of the first-level network device receives the packet. The central equipment may determine the downlink port receiving the notification message in step 1101, as the downlink port for sending the packet.

In an example scenario, referring to FIG. 12, if the second-level network device D has accessed the network, the uplink port 0a of the first-level network device B sends the notification message to a downlink port 1 of central equipment A. The central equipment A may determine that the port receiving the notification message is the downlink port 1, and sends the packet through the downlink port 1, so that the packet arrives at the first-level network device B.

1103. The first-level network device receives the packet, and determines at least one downlink data block in at least one data block based on port indication information.

With respect to a specific process of identifying the downlink data block, in a possible implementation, the first-level network device may determine a data block whose destination port is a downlink port in the at least one data block in the following step 1 to step 3, so as to identify the at least one downlink data block.

Step 1: The first-level network device determines a downlink port identifier in the port indication information.

For each of at least one downlink port of the first-level network device, the first-level network device may prestore a downlink port identifier of the downlink port; and parse, at a location in the port indication information, a bit of the location in the port indication information, to obtain the downlink port identifier carried in the bit.

The port 1 is used as an example. It is specified in advance that the downlink port identifier of the port 1 is carried in the second bit in the port indication information. The first-level network device B may determine the second bit in the port indication information, and parse the second bit to obtain the downlink port identifier carried in the second bit. For example, the second bit in "X1XXX" may be determined to obtain 1.

Step 2: The first-level network device determines whether the downlink port identifier is a valid identifier.

When the downlink port identifier is a valid identifier, it indicates that the at least one data block includes a data block whose destination port is a downlink port, and then the first-level network device performs step 3. When the downlink port identifier is an invalid identifier, it indicates that the at least one data block does not include a data block whose destination port is a downlink port, and then the first-level network device does not need to perform step 3. That the valid identifier is 1 and the invalid identifier is 0 is used as an example. The first-level network device may determine whether the downlink port identifier is 1; and when the downlink port identifier is 1, perform step 3.

Step 3: The first-level network device determines the downlink data block from the at least one data block.

In a possible implementation, this step may include (1) and (2) as follows.
(1) The first-level network device obtains a location of the downlink port identifier in all valid identifiers in the port indication information.

One or more downlink port identifiers in the port indication information may be set as a valid identifier, and the control port identifier in the port indication information may also be set as a valid identifier. For any downlink port identifier, the network device may determine each port identifier from the first port identifier to the downlink port identifier in the port indication information; and determine, based on a value of the port identifier, a valid identifier sequence number of the downlink port identifier in the port indication information, that is, a location of the downlink port identifier in all valid identifiers in the port indication information.

(2) The first-level network device determines a data block, in the at least one data block, corresponding to the location as the downlink data block.

The first-level network device may determine a sorting sequence of data blocks in the packet, and determine the data block, in the at least one data block, corresponding to the location. For example, if the packet includes only a data block in one period, a data block at the location in the at least one data block in the packet is directly determined, and the data block at the location is used as the downlink data block. For another example, if the packet includes data blocks in a plurality of periods, a data block at the location is determined in each period, and the data block at the location in each period is used as a downlink data block, to obtain a plurality of downlink data blocks.

For example, referring to FIG. 6, for the port 1 of the first-level network device, assuming that the first two bits in the port indication information are 01, the first-level network device may determine that a downlink port identifier of the port 1 is the first bit in all valid identifiers. In this case, the first-level network device may identify the first data block in at least one data block, and use the first data block as a downlink data block on the port 1. Further, based on a structure with a plurality of periods, the first-level network device may determine the first data block in the first period, the first data block in the second period, and so on, end the process until the first data block in the last period is determined, and use all these data blocks as downlink data blocks on the port 1.

Likewise, assuming that the port indication information is 11, the first-level network device may determine that a downlink port identifier of the port 1 is the second bit in all valid identifiers. In this case, the first-level network device may identify the second data block in at least one data block, and use the second data block as a downlink data block on the port 1. Further, based on a structure with a plurality of periods, the first-level network device may determine the second data block in the first period, the second data block in the second period, and so on, end the process until the second data block in the last period is determined, and use all these data blocks as downlink data blocks on the port 1.

1104. The first-level network device generates a packet based on the at least one downlink data block, and sends the packet to the second-level network device.

The first-level network device may encapsulate the at least one downlink data block to obtain the packet.

With respect to a process of sending the packet, the first-level network device may determine a downlink port connected to the second-level network device, and send the packet through the downlink port. The packet is transmitted from the downlink port of the first-level network device to an uplink port of the second-level network device over the network link between the downlink port of the first-level network device and the uplink port of the second-level network device, so that the uplink port of the second-level network device receives the packet. The first-level network device may determine the downlink port whose state has been set to an "up" state in step 1101; and use the downlink port whose state has been set to an "up" state as the downlink port connected to the second-level network device, that is, the downlink port for sending the packet.

In an example scenario, referring to FIG. 12, if the second-level network device D has accessed the network and the state of the downlink port 1 of the first-level network device B is adjusted from a "down" state to an "up" state in step 1101, the first-level network device B sends a packet through the downlink port 1 in this step, so that the packet arrives at the second-level network device D. If the second-level network device E has accessed the network and the state of the downlink port 2 of the first-level network device B is adjusted from a "down" state to an "up" state in step 1101, the first-level network device B sends a packet through the downlink port 2 in this step, so that the packet arrives at the second-level network device E.

1105. The second-level network device receives the packet, and determines a control data block based on port indication information.

Step 1105 is similar to step 1103. To be specific, the second-level network device may determine the port indication information in the packet; determine a control port identifier in the port indication information; determine whether the control port identifier is a valid identifier; and when the port identifier is a valid identifier, determine, from at least one data block in the packet, a data block whose destination port is a control port in the at least one data block, to obtain the control data block.

1106. The second-level network device parses the control data block to obtain a device information sending instruction carried in the control data block.

The central equipment adds the device information sending instruction to the control data block. Therefore, in this step, the second-level network device parses the control data block to obtain the device information sending instruction carried in the control data block; and the second-level network device may learn, according to the device information sending instruction, that the central equipment instructs the second-level network device to report the device information. In this case, in response to the device information sending instruction, the second-level network device obtains the device information of the second-level network device, and sends the device information to the first-level network device, so that the first-level network device forwards the device information to the central equipment, and the central equipment generates a network topology based on the device information of the second-level network device.

For a description of the device information of the second-level network device, refer to step 404. Details are not described herein again.

1107. The second-level network device sends device information to the first-level network device.

With respect to a specific process of sending the device information by the second-level network device, in a possible implementation, the second-level network device may generate a packet in a novel packet format by using the novel packet format provided in this embodiment of this application; and add the device information to the packet, so as to send the device information of the second-level network device.

For a specific implementation of generating the packet by the second-level network device, a process of generating the packet by the second-level network device is similar to the process of generating the packet in step 404. To be specific, the second-level network device may generate port indication information and a control data block by using the control port, where the port indication information is used to indicate a source port of the control data block. The second-level network device may encapsulate the port indication information and the control data block to obtain a packet. The packet includes the port indication information and the control data block, and the control data block carries the device information of the second-level network device.

With respect to a specific process of sending the packet by the second-level network device to the first-level network device, the second-level network device may determine an uplink port receiving the packet in step 1105, that is, an uplink port at which the packet carrying the device information sending instruction arrives; and send, through the uplink port, the packet generated by the second-level network device. The packet is transmitted to a downlink port of the first-level network device over a network link between the downlink port of the first-level network device and the uplink port, so that the downlink port of the first-level network device receives the packet.

In an example scenario, referring to FIG. 12, if the second-level network device D receives the packet sent by the first-level network device B through the uplink port 0a in step 1101, the second-level network device D sends the packet to the first-level network device B through the uplink port 0a in this step. The packet passes through the network link between the uplink port 0a of the second-level network device D and the downlink port 1 of the first-level network device B, and then arrives at the downlink port 1 of the first-level network device B.

1108. The first-level network device receives the device information, and sends the device information to the central equipment.

The first-level network device may receive the packet from the second-level network device, where the packet carries the device information of the second-level network device, so as to receive the device information.

With respect to a specific process of forwarding the device information of the second-level network device by the first-level network device, the first-level network device may generate a packet, where the packet includes the device information of the second-level network device. For example, after receiving the packet from the second-level network device, the first-level network device may generate port indication information; encapsulate the port indication information into the received packet to obtain an encapsulated packet; and send the encapsulated packet to the central equipment. In this case, the encapsulated packet includes the packet generated by the second-level network device, and further includes the port indication information generated by the first-level network device.

Optionally, if the first-level network device has a requirement for reporting information to the central equipment, the first-level network device may further generate a control data block, and encapsulate the port indication information and the control data block into the received packet. In this case, the encapsulated packet includes the packet generated by the second-level network device, and further includes the port indication information and the control data block that are generated by the first-level network device.

In this case, the packet sent by the first-level network device is similar to the packet sent by the central equipment in step 1101, and also has a two-layer structure. An inner-layer packet is the packet generated by the second-level network device, and includes the port indication information and the control data block of the second-level network device, where the control data block carries the device information of the second-level network device. An outer-layer packet is the packet generated by the first-level network device, and includes the port indication information generated by the first-level network device.

The port indication information generated by the first-level network device is used to indicate a source port of the packet. From a perspective of the first-level network device, because the packet is not generated by the first-level network device but is received through the downlink port, the first-level network device uses the downlink port as the source port of the packet. During generation of the port indication information, the network device sets a downlink port identifier in the port indication information as a valid identifier, for example, adds 1 to the first bit in the port indication information.

In this embodiment, the first-level network device can indicate, by using the downlink port identifier, that the packet has a downlink data block that comes from the downlink port of the first-level network device, so as to indicate that the packet has data generated by the second-level network device. In this process, the first-level network device does not need to add an identifier of the second-level network device to the packet, and does not need to be aware of the device information of the second-level network device neither, thereby satisfying a constraint on unawareness of a network topology of another device.

1109. The central equipment receives the device information.

After receiving the packet, the central equipment may determine the port indication information in the packet; determine, based on the port indication information, a data block whose source port is the downlink port in the packet, to obtain the downlink data block; and parse the downlink data block to obtain the packet that is carried in the downlink data block and that is generated by the second-level network device. The central equipment may determine the port indication information in the packet; determine that the packet includes the control data block generated by the second-level network device; and parse the control data block to obtain the device information of the second-level network device carried in the control data block.

With respect to a specific process of determining the downlink data block, in a possible implementation, the central equipment may determine the downlink data block in the packet in the following step 1 to step 3.

Step 1: The central equipment determines a downlink port identifier in the port indication information.

For each of at least one downlink port of the second-level network device, the central equipment may prestore a downlink port identifier of the downlink port; and parse, at a location in the port indication information, a bit of the location in the port indication information, to obtain the downlink port identifier carried in the bit.

Step 2: The central equipment determines whether the downlink port identifier is a valid identifier.

When the downlink port identifier is a valid identifier, it indicates that the at least one data block in the packet includes a data block whose source port is a downlink port, and then the central equipment performs step 3. When the downlink port identifier is an invalid identifier, it indicates that the at least one data block does not include a data block whose source port is a downlink port, and then the central equipment does not need to perform step 3. That the valid identifier is 1 and the invalid identifier is 0 is used as an example. The central equipment may determine whether the downlink port identifier is 1; and when the downlink port identifier is 1, perform step 3.

Step 3: The central equipment determines the downlink data block from the at least one data block.

The central equipment may obtain a location of the downlink port identifier in all valid identifiers in the port indication information, and identify a data block at the location in the at least one data block, as the downlink data block.

Optionally, if the data blocks in the packet are successively sorted according to a plurality of periods, for each of the plurality of periods, the central equipment may identify a data block at the location in the period to obtain a downlink data block in the period, so as to obtain a plurality of data blocks corresponding to the plurality of periods; and use all the plurality of data blocks as downlink data blocks.

With respect to a specific process of determining the control data block generated by the second-level network device, in a possible implementation, similar to the process of determining the control data block by the central equipment in step 405, the central equipment may determine the control data block in the packet in the following step 1 to step 3.

Step 1: The central equipment determines a control port identifier in the port indication information.

Step 2: The central equipment determines whether the control port identifier is a valid identifier.

When the control port identifier is a valid identifier, it indicates that the at least one data block includes a data block whose source port is a control port, and then the central equipment performs step 3. When the control port identifier is an invalid identifier, it indicates that the at least one data block does not include a data block whose destination port is a control port, and then the central equipment does not need to perform step 3.

Step 3: The central equipment determines the control data block from the at least one data block.

1110. The central equipment generates a network topology based on the device information.

Each time the central equipment obtains device information of a second-level network device, the central equipment may determine the second-level network device and each port of the second-level network device based on the device information, to discover the second-level network device. The rest may be deduced by analogy. All second-level network devices can be discovered by using device information of all the second-level network devices. A network topology including all the second-level network devices can be generated based on the device information of all the discovered second-level network devices.

According to the method provided in this embodiment, hierarchical packet encapsulation and level-by-level discovery of network devices are implemented, and multi-level network topology construction can be performed. This can be used in a complex networking scenario, and is applicable to different types of access network scenarios with a wide application scope.

The network topology constructed in the foregoing embodiment may be a non-tree network topology. In this embodiment of this application, the central equipment can uniquely map each downlink port of the network device to a corresponding uplink port by using a terminal group, so as to split the non-tree network topology into a plurality of tree networks. The following specifically describes tree topology construction by using an embodiment in FIG. 15.

FIG. 15 is a flowchart of a network topology generation method according to an embodiment of this application. An entity for performing the method is central equipment. The method includes the following steps.

1501. The central equipment queries a network topology to obtain at least one uplink port and at least one downlink port of a network device.

The network topology may include each network device and device information of each network device on an entire network. For any network device, the central equipment may query the network topology; obtain port information of the network device from the network topology; and determine an uplink port and a downlink port of the network device based on the port information, to obtain at least one uplink port and at least one downlink port.

1502. The central equipment selects one uplink port from the at least one uplink port for each downlink port.

In this embodiment, the central equipment may establish a port mapping relationship for each network device on the network, and send the port mapping relationship to the network device, so that the network device implements a packet forwarding function by using the port mapping relationship.

To establish the port mapping relationship, after obtaining the at least one downlink port and the at least one uplink port of the network device, the central equipment may select a unique uplink port for each downlink port of the network device, that is, select only one uplink port for one downlink port, so as to ensure that one downlink port is mapped to a maximum of one uplink port.

For example, a process of selecting an uplink port may include the following two manners.

Manner 1: All uplink ports of the network device may be used as ports mapped to downlink ports, that is, the downlink ports are mapped to the uplink ports. In this case, during subsequent packet transmission performed based on the established port mapping relationship, all the uplink ports of the network device are used as ports for packet transmission.

For example, FIG. 15 is a schematic diagram of port mapping of a network device according to an embodiment of this application. The network device in FIG. 15 has an uplink port 0a, an uplink port 0b, a downlink port 1, a downlink port 2, a downlink port 3, and a downlink port 4. The network device may map the downlink port 1 and the downlink port 2 to the uplink port 0a, and map the downlink port 3 and the downlink port 4 to the uplink port 0b. In this way, all the uplink ports of the network device are used as ports mapped to the downlink ports.

Manner 2: Some uplink ports of the network device may be used as ports mapped to downlink ports. To be specific, the central equipment may select some uplink ports from all uplink ports, establish a mapping relationship between the some uplink ports and the downlink ports, and use a remaining uplink port as a standby port. In this case, during subsequent packet transmission performed based on the established mapping relationship, the some uplink ports of the network device are used as ports for packet transmission.

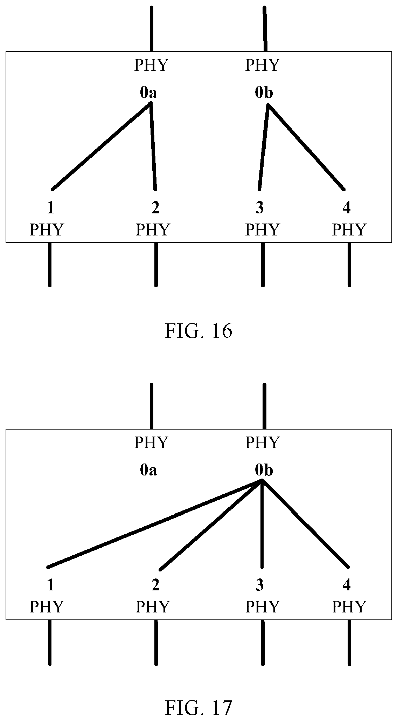

For example, referring to FIG. 17, the network device may use only an uplink port 0a as a port mapped to downlink ports, and use an uplink port 0b as a standby port. In this case, the central equipment may map all of a downlink port 1, a downlink port 2, a downlink port 3, and a downlink port 4 to the uplink port 0a of the network device.

1503. The central equipment establishes a port mapping relationship for the network device based on the uplink port mapped to each downlink port.

The port mapping relationship is used to indicate the uplink port mapped to each downlink port, and port indication information is used by the network device to determine a corresponding uplink port based on a downlink port, so that a path for packet uplink transmission performed by the network device is determined. The port mapping relationship may include an identifier of the at least one downlink port and a corresponding identifier of the at least one uplink port. For example, the port mapping relationship may be listed as Table 1:

**Table 1**

| Identifier of a downlink port | Identifier of an uplink port |
|---|---|
| 1 | 0a |
| 2 | 0a |
| 3 | 0b |
| 4 | 0b |

It should be noted that the central equipment may store the port mapping relationship of the network device, for example, write the port mapping relationship into a database. Optionally, each time after the central equipment establishes a port mapping relationship for a network device, the central equipment may store the port mapping relationship of the network device. Therefore, the central equipment may store port mapping relationships of all network devices on the entire network, so as to perform readjustment based on the stored port mapping relationships when a network link fault occurs.

1504. The central equipment sends the port mapping relationship to the network device.

Based on the packet encoding format provided in this application, a process of sending the port mapping relationship may include the following step 1 to step 3.

Step 1: The central equipment generates a packet based on the port mapping relationship, where the packet includes port indication information and at least one data block.

If the network device is a first-level network device, a process of generating the port indication information and the data block by the central equipment is similar to that in the embodiment in FIG. 4. If the network device is a second-level network device or another multi-level network device, a process of generating the port indication information and the data block by the central equipment is similar to that in the embodiment in FIG. 10. A difference lies in that, in this step, content added to a control data block by the central equipment is different. The central equipment adds the device information sending instruction to the control data block in the embodiment in FIG. 4 and the embodiment in FIG. 10, while in this step, the central equipment adds the port mapping relationship to the control data block.

Step 2: The network device receives the packet, and determines, based on the port indication information, a data block whose destination port is a control port in the at least one data block, to obtain the control data block.

Step 3: The network device parses the control data block to obtain the port mapping relationship carried in the control data block.

After obtaining the port mapping relationship, the network device may store the port mapping relationship, can implement the packet forwarding function by using the port mapping relationship, without awareness of device information of an adjacent device and without awareness of the network topology of the entire network, and only needs to maintain the port mapping relationship of the network device. This can be applied to a network device at a physical layer.

For example, a process of using the port mapping relationship for packet transmission may include the following step 1 and step 2.

Step 1: The network device receives a packet from a terminal through any downlink port.

The terminal may be a user side device, and the terminal may generate a packet. The packet generated by the terminal may be referred to as a data packet, and may carry service data. The terminal may send the packet, and the network device may receive the packet through the downlink port.

It should be noted that the packet received by the network device may be the packet that is directly sent by the terminal to the network device. For example, the network device is a network device at an access layer. For example, the network device is a second-level network device in FIG. 1. In this case, after the terminal sends the packet, a downlink port of the network device can receive the packet. In addition, the packet received by the network device may alternatively be the packet that is forwarded by a next-level network device after being sent by the terminal. For example, the network device is a network device at an aggregation layer. For example, the network device is a first-level network device in FIG. 1. In this case, after the terminal sends the packet, a second-level network device receives the packet and forwards the packet to the first-level network device. Then, a downlink port of the first-level network device receives the packet.

Step 2: The network device queries the port mapping relationship to obtain an uplink port mapped to the downlink port.

With respect to a process of receiving the packet, each downlink port of the network device may be connected to another device through a network link, and the downlink port may receive a packet sent by the another device. For example, in an implementation environment shown in FIG. 1, the downlink port of the second-level network device may receive the packet sent by the terminal, and the downlink port of the first-level network device may receive the packet sent by the second-level network device.

With respect to a process of querying the mapping relationship, the network device may determine the downlink port receiving the packet, and use the downlink port as an index to query the port mapping relationship, so as to obtain the uplink port corresponding to the downlink port from the port mapping relationship.

Step 3: The network device sends the packet to the central equipment through the uplink port mapped to the downlink port.

If the network topology is a one-level network topology, the packet can directly arrive at the central equipment after uplink forwarding is performed by the network device on the packet. Specifically, the packet passes through a network link between the uplink port of the network device and a downlink port of the central equipment, and then arrives at the downlink port of the central equipment.

If the network topology is a multi-level network topology, after uplink forwarding is performed by the network device on the packet, the packet continues to be forwarded level by level from bottom to top, until the packet arrives at the central equipment. Specifically, the packet passes through a network link between the uplink port of the network device and a downlink port of a previous-level network device, and then arrives at the downlink port of the previous-level network device. Then, the previous-level network device performs a step similar to the foregoing step, queries a port mapping relationship stored in the previous-level network device, and sends the packet through a corresponding uplink port. The rest may be deduced by analogy, until the packet is forwarded to a downlink port of the central equipment.

1505. The central equipment repeats the foregoing steps to obtain a plurality of tree topologies obtained through splitting.

A tree topology (tree topology) is a network topology in a shape similar to an upward tree with hierarchically arranged network nodes. The tree topology mainly includes two types of network nodes: a root node and a leaf node. A path between each leaf node and the root node in the tree topology is unique, no loop occurs between any two network nodes on a network, and the network nodes are easy to manage. In the tree topology, there are the following advantages: Expansion of network nodes is convenient and flexible, discovery of a link path is relatively convenient, and the like.

In this embodiment, the central equipment repeats step 1501 to step 1504 to successively establish a port mapping relationship for each network device, so as to split the network topology generated in the embodiment in FIG. 4 or the embodiment in FIG. 10 into tree topologies.

Specifically, the downlink port of the network device is uniquely mapped to the uplink port, and the port mapping relationship is delivered. When the network device uses the port mapping relationship to forward a packet, after any packet arrives at a downlink port, the packet is forwarded only through a unique uplink port instead of being repeatedly forwarded through a plurality of uplink ports. This ensures uniqueness of an internal transmission path of the packet in the network device. Based on uniqueness of an internal transmission path of each network device on a network, the downlink port of the network device is directly or indirectly connected to the terminal, and the uplink port of the network device is directly or indirectly connected to the central equipment, so that a path between the terminal and the central equipment is unique. Therefore, each downlink port of the central equipment becomes a root node in a tree topology, and each terminal becomes a leaf node in the tree topology. In this case, a non-tree network topology can be split into a plurality of tree topologies.

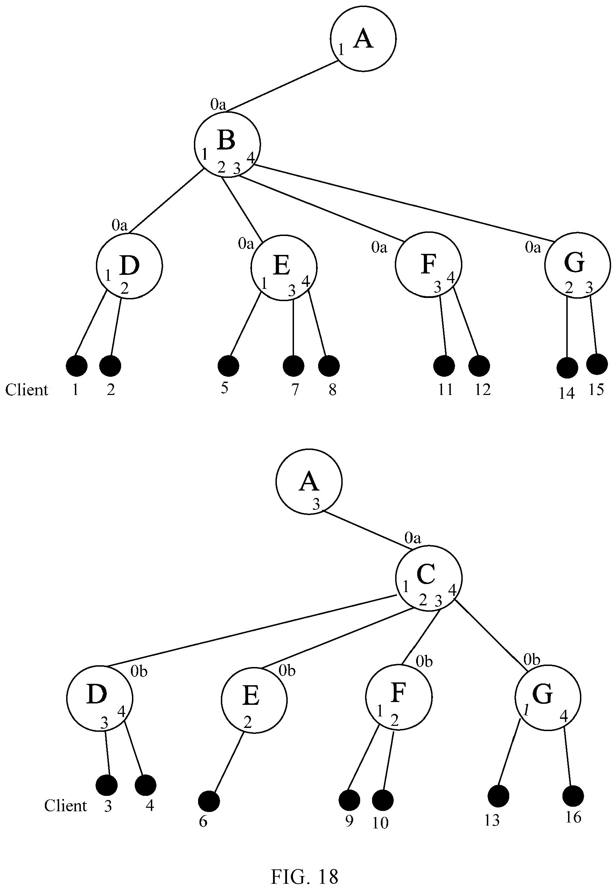

For example, referring to FIG. 12 and FIG. 18, the central equipment A establishes a port mapping relationship for each network device in FIG. 12, delivers the port mapping relationship to the network device, and splits a network topology into two tree topologies shown in FIG. 18. A downlink port 1 of the central equipment A has a tree topology below, and a downlink port 3 of the central equipment A has another tree topology below. The tree topology corresponding to the downlink port 1 is used as an example. Referring to an upper figure in FIG. 18, the downlink port 1 of the central equipment is a root node, and a group of leaf nodes of the downlink port 1 are a terminal 1, a terminal 2, a terminal 5, a terminal 7, a terminal 8, a terminal 11, a terminal 12, a terminal 14, and a terminal 15.

In the method provided in this embodiment, the port mapping relationship is established for each network device, and the port mapping relationship is delivered to the network device. Because each downlink port is corresponding to a unique uplink port in the port mapping relationship, uniqueness of an internal transmission path of a packet in a network device can be ensured. In addition, uniqueness of an internal transmission path in each network device can ensure uniqueness of a path between the terminal and the central equipment. This implements construction of a tree topology, can avoid a loop that occurs in the network topology, and can further avoid a broadcast storm caused by circulation and proliferation of the packet in the loop, thereby ensuring stability of the network topology.

Further, the central equipment establishes the port mapping relationship for each network device, and delivers the port mapping relationship to the network device. The network device can implement a packet forwarding function only by storing the port mapping relationship of the network device without awareness of the device information of the adjacent device and without awareness and storage of the network topology of the entire network. This overcomes a limitation that the network device can forward a packet only when the network device can identify a layer 2 network protocol or a layer 3 network protocol, and can be applicable to the network device at the physical layer. The network device at the physical layer forwards the packet. This satisfies a requirement for simplifying a function of the network device to the utmost, and reduces running power consumption of the network device.

It should be noted that a process for packet downlink transmission performed by the network device is similar to that in the embodiment in FIG. 4 or the embodiment in FIG. 11. That the process is applied to the implementation environment shown in FIG. 2 is used as an example. The process for packet downlink transmission may include the following step 1 to step 6.

Step 1: The central equipment generates a packet, where the packet includes port indication information and at least one data block, the at least one data block includes at least one downlink data block whose destination port is a downlink port, and the at least one downlink data block carries data to be sent to a terminal.

Step 2: The central equipment sends the packet to the network device.

Step 3: The network device receives the packet, and determines, based on the port indication information, a data block whose destination port is the downlink port in the packet, to obtain the at least one downlink data block.

Step 4: The network device generates a packet, where the packet includes the at least one downlink data block obtained in step 3.

Step 5: The network device sends the packet to the terminal through the downlink port.

Step 6: The terminal receives the packet, and obtains the data from the packet.

That the process is applied to the implementation environment shown in FIG. 1 is used as an example. The process for packet downlink transmission may include the following step 1 to step 9.

Step 1: The central equipment generates a packet, where the packet includes port indication information and at least one data block that are to be sent to the first-level network device, the at least one data block includes at least one downlink data block whose destination port is a downlink port, and the at least one downlink data block carries port indication information to be sent to the second-level network device and data to be sent to a terminal.

Step 2: The central equipment sends the packet to the first-level network device.

Step 3: The first-level network device receives the packet, and determines, based on the port indication information in the packet, a data block whose destination port is the downlink port in the at least one data block, to obtain the at least one downlink data block.

Step 4: The first-level network device generates a packet, where the packet includes the at least one downlink data block obtained in step 3.

Step 5: The first-level network device sends the packet to the second-level network device through the downlink port.

Step 6: The second-level network device receives the packet, and determines, based on the port indication information in the packet, a data block whose destination port is the downlink port in the packet, to obtain the at least one downlink data block.

Step 7: The second-level network device generates a packet, where the packet includes the at least one downlink data block obtained in step 6, and the at least one downlink data block carries the data to be sent to the terminal.

Step 8: The second-level network device sends the packet to the terminal through the downlink port.

Step 9: The terminal receives the packet, and obtains the data from the packet.

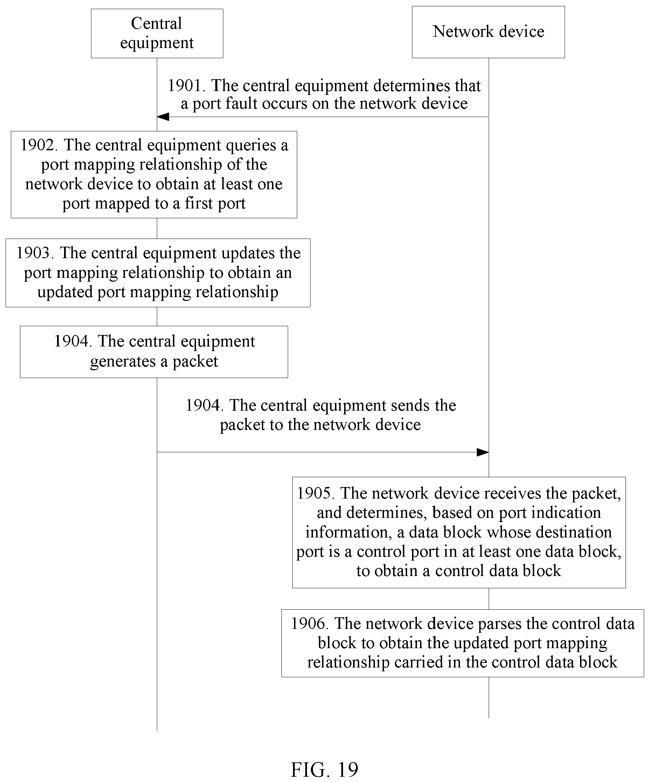

After the network topology is constructed, a network link may be disconnected due to a port fault, a network jitter, or other factors. In this embodiment of this application, a function of dynamically updating the network topology can be implemented. When the network link is disconnected, the network device may report a link status to the central equipment. The central equipment controls the topology of the entire network, can adjust the port mapping relationship of the network device in real time based on the link status reported by the network device, and reconstruct a network topology, thereby protecting the network topology. By using an embodiment in FIG. 19, the following details a specific implementation of dynamically updating the network topology.

FIG. 19 is a flowchart of a network topology generation method according to an embodiment of this application. Interaction entities in the method include central equipment and a network device. The method includes the following steps.

1901. The central equipment determines that a port fault occurs on the network device.

The port fault may include: A port is in a "down" state, a network link is disconnected, a network link jitters, a transmission delay is relatively large, and other abnormal situations. When the port fault occurs on the network device, the central equipment may detect that the port fault occurs on the network device, so as to reconstruct a port mapping relationship of the network device.

To differentiate descriptions, that in the network device, any port on which a fault occurs is referred to as a first port and any port on which no fault occurs is referred to as a second port is used as an example for description in this embodiment. The first port may be an uplink port or may be a downlink port. In a possible implementation, when a port fault occurs on the first port of the network device, the central equipment may detect the port fault in the following step 1 and step 2.

Step 1: After a port fault occurs on a first port, the network device sends a notification message to the central equipment through a second port.

The network device can be aware of a status of each port. When a port fault occurs on the first port, the network device can be aware of the port fault, and performs a procedure for sending a notification message.

The notification message is used to indicate that a fault has occurred on the first port. The notification message may be generated by using a control port of the network device, and the notification message may be recorded as a link status change message in a program. With respect to content of the notification message, the notification message may carry an identifier of the first port, and the notification message may indicate the first port by using the identifier of the first port. In addition, the notification message may also carry an identifier of a network link connected to the first port, so as to indicate the disconnected network link by using the identifier of the network link. The notification message may be sent through the second port of the network device. The second port is different from the first port, and the second port is a port on which no port fault occurs on the network device.

In a possible implementation, the network device may generate port indication information and a control data block by using the packet encoding format provided in this application; add the notification message to the control data block; encapsulate the port indication information and the control data block to obtain a packet; and send the packet to the central equipment, so as to send the notification message. If the network device is a network device directly connected to the central equipment, a manner for sending the packet by the network device is similar to that in the embodiment in FIG. 4. If the network device is a network device indirectly connected to the central equipment, a manner for sending the packet by the network device is similar to that in the embodiment in FIG. 11.

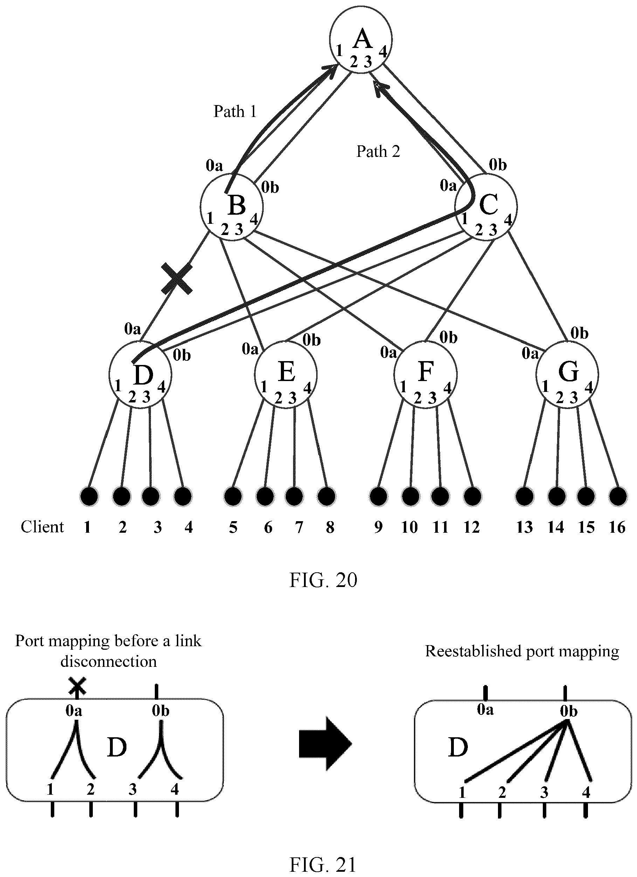

In an example scenario, referring to FIG. 20, a network device D in FIG. 20 is used as an example. When the network device D is aware that an uplink port 0a is disconnected, the network device D sends a notification message to the central equipment A through an uplink port 0b of the network device D. The notification message passes through a path 2, and then arrives at the central equipment A. A network device B in FIG. 20 is used as an example. When the network device B is aware that a fault occurs on a downlink port 1, the network device B may send a notification message to the central equipment A through an uplink port 0a of the network device B. The notification message passes through a path 1, and then arrives at the central equipment A.

Step 2: The central equipment receives the notification message from the second port of the network device.

The central equipment may receive, through a downlink port, the notification message sent by the network device through the second port; and the central equipment may determine, based on the notification message, that a fault occurs on the first port of the network device. For example, the central equipment may parse the notification message to obtain the identifier of the first port, and determine, based on the identifier of the first port, that the fault occurs on the first port. In addition, after determining that the first port of the network device is disconnected, the central equipment may stop sending a packet to the first port.

1902. The central equipment queries a port mapping relationship of the network device to obtain at least one port mapped to the first port.

The central equipment may determine the pre-established port mapping relationship of the network device, use the first port as an index to query the port mapping relationship of the network device, and obtain, from the port mapping relationship, at least one port mapped to the first port, so as to update a port mapped to the at least one port. For example, if the first port is an uplink port, a downlink port originally mapped to the first port is made to be mapped to an uplink port other than the first port. For another example, if the first port is a downlink port, an uplink port originally mapped to the first port is made to be mapped to a downlink port other than the first port. For example, referring to FIG. 21, that the first port is a port 0a of a network device D is used as an example. After querying a port mapping relationship, the central equipment may determine that downlink ports mapped to the port 0a include a port 1 and a port 2 before a network link is disconnected.

1903. The central equipment updates the port mapping relationship to obtain an updated port mapping relationship.

With respect to a specific process of updating the port mapping relationship, the central equipment may determine a port, connected to a network, of the network device, to obtain the second port; and make the at least one port, originally established a mapping relationship with the first port, establish a mapping relationship with the second port, so as to obtain the updated port mapping relationship. In the updated port mapping relationship, the at least one port, originally mapped to the first port, is mapped to the second port of the network device.

For example, the first port on which a port fault occurs is an uplink port, and a process of determining the second port may include the following three implementations.

Implementation 1: The central equipment may determine a source port of the notification message, that is, an uplink port used by the network device to send the notification message; and use the source port of the notification message as the second port.

Implementation 2: The central equipment may determine all uplink ports in the port mapping relationship; and select, as the second port, an uplink port from all the uplink ports except the first port.

Implementation 3: The central equipment may reserve an uplink port of the network device as a standby port before establishing the port mapping relationship. Then, in this step, the central equipment may determine the standby port of the network device, and use the standby port as the second port.

For example, it is assumed that the port mapping relationship before the updating is listed in Table 1, and the downlink ports originally mapped to the uplink port 0a are the downlink port 1 and the downlink port 2. After a fault occurs on the uplink port 0a, the central equipment may reestablish a mapping relationship between the downlink port 1 and the uplink port 0b and between the downlink port 2 and the uplink port 0b. In this case, the updated port mapping relationship may be listed in Table 2:

**Table 2**

| Identifier of a downlink port | Identifier of an uplink port |
|---|---|
| 1 | 0b |
| 2 | 0b |
| 3 | 0b |
| 4 | 0b |

It should be noted that through adjustment of the port mapping relationship of the network device, during packet transmission, a network link on which a fault occurs is bypassed, so that a network topology is adjusted. After the port mapping relationship is updated, the packet originally sent through the first port is changed to be sent through the second port. Therefore, the packet is transmitted by bypassing the network link connected to the first port. In addition, a network device connected to the first port may be different from a network device connected to the second port, and therefore a network device at which the packet arrives also changes.

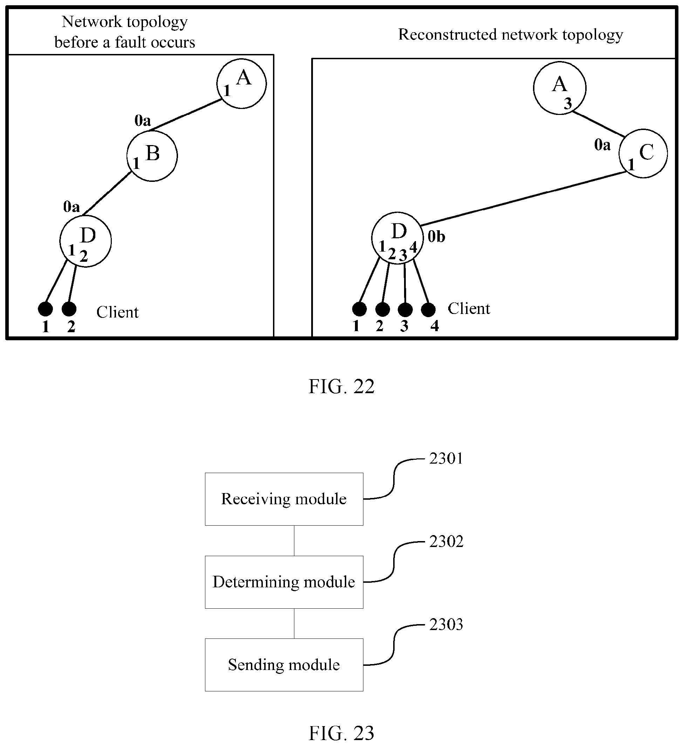

For example, referring to FIG. 22, before a fault occurs, packets for uplink transmission performed by a terminal 1 and a terminal 2 are transmitted over a network link between a downlink port 1 of a first-level network device B and an uplink port 0a of a second-level network device D. After the network link is disconnected, the uplink port 0a in a port mapping relationship of the network device D is updated to an uplink port 0b, and then a network topology is updated from the left figure to the right figure in FIG. 23. The packets for uplink transmission performed by the terminal 1 and the terminal 2 do not pass through the disconnected network link, but pass through a network link between a downlink port 1 of a first-level network device C and the uplink port 0b of the second-level network device D, for uplink transmission.

1904. The central equipment generates a packet, and sends the packet to the network device, where the packet includes port indication information and at least one data block, the port indication information is used to indicate a destination port of each data block, the at least one data block includes a control data block, and the control data block carries the updated port mapping relationship.

The central equipment may add the updated port mapping relationship to the control data block in the packet, and set a control port identifier in the port indication information in the packet as a valid identifier, for example, add 1 to the first bit in the port indication information.

1905. The network device receives the packet, and determines, based on the port indication information, a data block whose destination port is a control port in the at least one data block, to obtain the control data block.

1906. The network device parses the control data block to obtain the updated port mapping relationship carried in the control data block.

After obtaining the updated port mapping relationship, the network device stores the updated port mapping relationship, for example, replaces the originally stored port mapping relationship with the updated port mapping relationship, so as to subsequently use the updated port mapping relationship for packet forwarding.

For example, referring to FIG. 21, it is assumed that before the network link is disconnected, the uplink port 0a of the network device D is mapped to the downlink port 1 and the downlink port 2. After a fault occurs on the uplink port 0a, the uplink port mapped to the downlink port 1 and the downlink port 2 is updated to an uplink port 0b.

For example, a process of using the updated port mapping relationship for packet forwarding may include the following step 1 to step 3.

Step 1: The network device receives a packet through any downlink port.

Step 2: The network device queries the updated port mapping relationship to obtain a second port corresponding to the downlink port.

Step 3: The network device sends the packet through the second port.

Because the port mapping relationship is updated, after the network device queries the updated port mapping relationship, the obtained uplink port is changed from the first port to the second port, and then the network device sends the packet through the second port instead.

According to the method provided in this embodiment, after a fault occurs on the first port of the network device, the central equipment updates the port mapping relationship, and makes the at least one port, originally established a mapping relationship with the first port in the port mapping relationship, establish a mapping relationship with the second port. In this way, a function of adaptively and dynamically updating the network topology is implemented as the current network link is disconnected. This ensures robustness of the network topology, thereby protecting the network topology.

FIG. 23 is a schematic structural diagram of a network topology generation apparatus according to an embodiment of this application. The apparatus includes a receiving module 2301, a determining module 2302, and a sending module 2303.

The receiving module 2301 is configured to perform the process of receiving the packet in step 403.

The determining module 2302 is configured to perform the process of determining the control data block in step 403.

The sending module 2303 is configured to perform the process of sending the device information in step 404.

In a possible implementation, the determining module 2302 is configured to determine a control port identifier in port indication information.

In a possible implementation, at least one data block includes at least one downlink data block; and
the at least one downlink data block carries the port indication information and the control data block that are to be sent to a next-level network device of a network device, or the at least one downlink data block carries data to be sent to a terminal.

In a possible implementation, the determining module 2302 is configured to determine the at least one downlink data block.

In a possible implementation, the apparatus further includes a generation module, configured to perform the process of generating the packet in step 1204.

The sending module 2303 is further configured to perform the process of sending the packet in step 1204.

In a possible implementation, the receiving module 2301 is configured to perform the process of receiving the packet in step 1203 or step 1205.

In a possible implementation, the determining module 2302 includes:
an obtaining submodule, configured to obtain a location of a downlink port identifier; and
a determining submodule, configured to determine a data block corresponding to the location as the downlink data block.

In a possible implementation, the sending module 2303 includes:
a generation submodule, configured to perform the process of generating the packet in step 404; and
a sending submodule, configured to perform the process of sending the packet in step 404.

In a possible implementation, the sending module 2303 is configured to perform the processes of sending the packet in step 1204, step 1207, and step 1208.

It should be noted that the receiving module 2301 may be implemented by a receiver of an electronic device, the sending module 2303 may be implemented by a transmitter of the electronic device, and the determining module 2302 may be implemented by a processor of the electronic device.

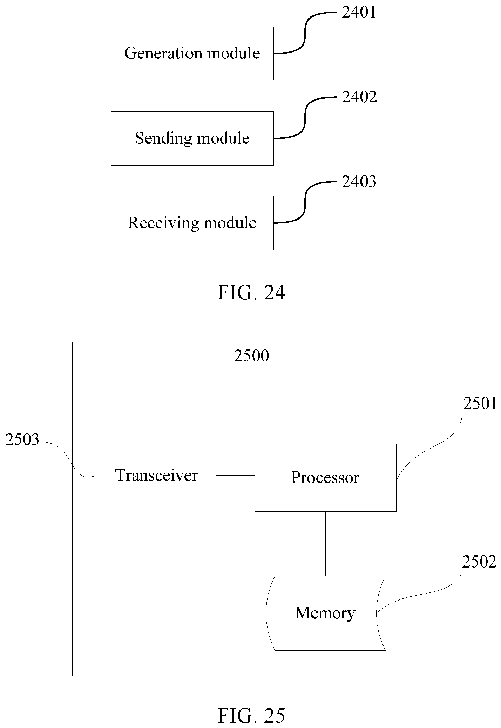

FIG. 24 is a schematic structural diagram of a network topology generation apparatus according to an embodiment of this application. The apparatus includes a generation module 2401, a sending module 2402, and a receiving module 2403.

The generation module 2401 is configured to perform step 401.

The sending module 2402 is configured to perform step 402.

The receiving module 2403 is configured to perform step 405.

The generation module 2401 is further configured to perform step 406.

In a possible implementation, a control port identifier in port indication information is a valid identifier.

In a possible implementation, at least one data block includes at least one downlink data block; and
the at least one downlink data block carries the port indication information and a control data block that are to be sent to a next-level network device of a network device, or the at least one downlink data block carries data to be sent to a terminal.

In a possible implementation, the generation module 2401 is configured to perform step 1201 and/or step 1210.

In a possible implementation, a downlink port identifier in the port indication information is a valid identifier.

In a possible implementation, a location of the downlink port identifier in all valid identifiers in the port indication information is corresponding to a location of the downlink data block in the at least one data block.

It should be noted that the generation module 2401 may be implemented by a processor of an electronic device, the sending module 2402 may be implemented by a transmitter of the electronic device, and the receiving module 2403 may be implemented by a receiver of the electronic device.

It should be noted that, when the network topology generation apparatus provided in the foregoing embodiment generates the network topology, the division of the foregoing function modules is merely used as an example for description. In actual application, the foregoing functions may be allocated to different function modules for implementation depending on a requirement, that is, an inner structure of the device is divided into different function modules to implement all or some of the functions described above. In addition, the network topology generation apparatus provided in the foregoing embodiment is based on a same concept as the embodiment of the network topology generation method. For a specific implementation process thereof, refer to the method embodiment. Details are not described herein again.

FIG. 25 is a schematic structural diagram of an electronic device according to an embodiment of this application. The electronic device 2500 may be provided as a network device and/or central equipment. Referring to FIG. 25, the electronic device 2500 includes a processor 2501 and a memory 2502, and may further include a transceiver 2503. The memory 2502 stores a computer program, and the processor 2501 is configured to execute the computer program stored in the memory 2502. When the electronic device 2500 is provided as a network device, the computer program is used to perform the network topology generation method performed by the network device side in the following embodiments. When the electronic device 2500 is provided as central equipment, the computer program is used to perform the network topology generation method performed by the central equipment side in the following embodiments.

The memory 2502 may include a random-access memory (random-access memory, RAM for short below), a read-only memory (Read-Only Memory, ROM for short below), a flash memory (flash memory), a hard disk drive (Hard Disk Drive, HDD for short below), and a solid-state drive (Solid-State Drive, SSD for short below).

The processor 2501 may be a central processing unit (Central Processing Unit, CPU for short below).

The transceiver 2503 may be a downlink port and/or an uplink port of a network device. The uplink port may be connected to a previous-level device. The uplink port can receive a packet sent by the previous-level device, and can also send a packet to a next-level device. The downlink port may be connected to a next-level device. The downlink port can receive a packet sent by the next-level device, and can also send a packet to the next-level device.

When the electronic device 2500 is provided as a network device, the processor 2501 controls the transceiver 2503 to receive a packet from central equipment, where the packet includes port indication information and at least one data block, and the port indication information is used to indicate a destination port of each data block;
the processor 2501 determines a control data block in the at least one data block based on the port indication information; and
the processor 2501 controls the transceiver 2503 to send device information to the central equipment according to a device information sending instruction in the control data block, where the device information is used by the central equipment to generate a network topology.

In a possible implementation, the processor 2501 determines a control port identifier in the port indication information, where the control port identifier is used to identify whether the at least one data block has a control data block; and when the control port identifier is a valid identifier, determines that a data block whose destination port is a control port in the at least one data block is the control data block.

In a possible implementation, the at least one data block includes at least one downlink data block; and
the at least one downlink data block carries the port indication information and the control data block that are to be sent to a next-level network device, or the at least one downlink data block carries data to be sent to a terminal.

In a possible implementation, the processor 2501 determines the at least one downlink data block in the at least one data block based on the port indication information; and generates a packet based on the at least one downlink data block, where the packet includes the at least one downlink data block; and
the processor 2501 controls the transceiver 2503 to send the packet through a downlink port.

In a possible implementation, the processor 2501 determines a downlink port identifier in the port indication information, where the downlink port identifier is used to identify whether the at least one data block has a data block whose destination port is the downlink port; and
the processor 2501 determines, when the downlink port identifier is a valid identifier, that the data block whose destination port is the downlink port in the at least one data block is the downlink data block.

In a possible implementation, the processor 2501 obtains a location of the downlink port identifier in all valid identifiers in the port indication information; and determines that a data block, in the at least one data block, corresponding to the location as the downlink data block.

In a possible implementation, the processor 2501 generates a packet by using a control port, where the packet includes port indication information and a control data block, the port indication information is used to indicate a source port of the control data block, and the control data block carries the device information; and
the processor 2501 controls the transceiver 2503 to send the packet to the central equipment.

In a possible implementation, the processor 2501 controls the transceiver 2503 to receive a port mapping relationship from the central equipment, where the port mapping relationship is used to indicate an uplink port mapped to at least one downlink port;
the processor 2501 controls the transceiver 2503 to receive a packet from the terminal through any downlink port;
the processor 2501 queries the port mapping relationship to obtain an uplink port mapped to the downlink port; and
the processor 2501 controls the transceiver 2503 to send the packet to the central equipment through the uplink port.

In a possible implementation, the control port identifier is carried in a bit of a first preset location in the port indication information.

In a possible implementation, the control data block is at a second preset location in the at least one data block.

In a possible implementation, the data blocks in the packet are successively sorted according to a plurality of periods, and destination ports of data blocks at a same location in the plurality of periods are the same.

In a possible implementation, the processor 2501 controls the transceiver 2503 to receive a packet from the central equipment, where the packet includes port indication information and at least one data block;
the processor 2501 queries the port mapping relationship based on the port mapping relationship in the control data block after receiving the packet through the downlink port, to obtain the uplink port corresponding to the downlink port; and
the processor 2501 controls the transceiver 2503 to send the packet through the uplink port.

Optionally, each downlink port is mapped to a unique uplink port in the port mapping relationship.

In a possible implementation, the processor 2501 controls the transceiver 2503 to receive, after a first port is disconnected from a network, the packet from the central equipment, where the packet includes the port indication information and the at least one data block, and the first port is mapped to at least one port;
the processor 2501 determines a control data block in the at least one data block based on the port indication information; and parses the control data block to obtain an updated port mapping relationship, where the updated port mapping relationship includes a mapping relationship between a second port and the at least one port, and the second port is connected to the network.

When the electronic device 2500 is provided as central equipment, the processor 2501 generates a packet, where the packet includes port indication information and at least one data block, the port indication information is used to indicate a destination port of each data block, the at least one data block includes a control data block, and the control data block carries a device information sending instruction;
the processor 2501 controls the transceiver 2503 to send the packet to a network device;
the processor 2501 controls the transceiver 2503 to receive device information from the network device; and
the processor 2501 generates a network topology based on the device information.

In a possible implementation, a control port identifier in the port indication information is a valid identifier, and the control port identifier is used to identify whether the at least one data block has a control data block.

In a possible implementation, the at least one data block includes at least one downlink data block; and
the at least one downlink data block carries the port indication information and the control data block that are to be sent to a next-level network device of the network device, or the at least one downlink data block carries data to be sent to a terminal.

In a possible implementation, a downlink port identifier in the port indication information is a valid identifier, and the downlink port identifier is used to identify whether the at least one data block has a downlink data block.

In a possible implementation, a location of the downlink port identifier in all valid identifiers in the port indication information is corresponding to a location of the downlink data block in the at least one data block.

In a possible implementation, the processor 2501 controls the transceiver 2503 to query the network topology to obtain at least one uplink port and at least one downlink port of the network device;
the processor 2501 selects one uplink port from the at least one uplink port for each downlink port;
the processor 2501 establishes a port mapping relationship for the network device based on the uplink port corresponding to each downlink port; and
the processor 2501 controls the transceiver 2503 to send the port mapping relationship to the network device.

In a possible implementation, the processor 2501 generates a packet based on the port mapping relationship, where the packet includes port indication information and at least one data block, the at least one data block includes a control data block, and the control data block carries the port mapping relationship; and
the processor 2501 controls the transceiver 2503 to send the packet to the network device.

In a possible implementation, the control port identifier is carried in a bit of a first preset location in the port indication information.

In a possible implementation, the control data block is at a second preset location in the at least one data block.

In a possible implementation, the data blocks in the packet are successively sorted according to a plurality of periods, and destination ports of data blocks at a same location in the plurality of periods are the same.

In a possible implementation, the processor 2501 queries, when a first port of the network device is disconnected from a network, the port mapping relationship of the network device to obtain at least one port mapped to the first port; and
the processor 2501 updates the port mapping relationship to obtain an updated mapping relationship, where the at least one port in the updated port mapping relationship is mapped to a second port of the network device, and the second port is connected to the network.

In a possible implementation, the processor 2501 generates a packet based on the updated port mapping relationship, where the packet includes port indication information and at least one data block, and a control data block in the at least one data block carries the updated port mapping relationship; and
the processor 2501 controls the transceiver 2503 to send the packet to the network device.

In a possible implementation, the processor 2501 controls the transceiver 2503 to receive a notification message from the second port, where the notification message is used to indicate that the first port is disconnected from the network.

An embodiment used as an example further provides a computer-readable storage medium, for example, a memory including an instruction. The instruction may be executed by a processor of a network device and/or a processor of central equipment, to complete the network topology generation methods in the foregoing embodiments. For example, the computer-readable storage medium may be a read-only memory (Read-Only Memory, ROM for short below), a random-access memory (Random Access Memory, RAM for short below), a CD-ROM, a magnetic tape, a floppy disk, or an optical data storage device.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer program instructions. When the computer program instruction is loaded and executed on a computer, the procedure or functions according to the embodiments of this application are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer program instruction may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

## Claims

1. A network topology generation method, wherein the method comprises:
receiving (1102), by a network device working at a physical layer, a first packet from central equipment, wherein the first packet comprises port indication information and at least one data block, and the port indication information is used tc indicate a destination port of a further network device to which each of the at least one data block in the first packet is to be sent; and
sending (1108), by the network device, device information to the central equipment;
wherein the method further comprises: in response to receive the first packet,
determining (1103) by the network device, the control data block in the at least one data block based on the port indication information;
wherein the sending device information to the central equipment comprises:
generating (1104), by the network device, a packet by using a control port, wherein the packet comprises port indication information and a second control data block, the port indication information is used to indicate a source port of the second control data block, and the second control data block carries the device information; wherein the source port of the control data block is a control port of the network device, and
sending by the network device, the packet to the central equipment,
wherein the device information is sent according to a device information sending instruction in the control data block of the first packet, wherein the device information is configured to be used by the central equipment to generate a network topology at the physical layer using a function of constructing a network topology for the network device at the physical layer.

2. The method according to claim 1, wherein the determining the control data block in the at least one data block based on the port indication information comprises:
determining a control port identifier in the port indication information, wherein the control port identifier is used to identify whether the at least one data block has a control data block; and
when the control port identifier is a valid identifier indicating that at least one data block has a data block whose corresponding port is the destination port, determining that a data block whose destination port is a control port in the at least one data block is the control data block.

3. The method according to claim 1, wherein the at least one data block comprises at least one downlink data block; and
the at least one downlink data block carries the port indication information and the control data block that are to be sent to a next-level network device, or the at least one downlink data block carries data to be sent to a terminal.

4. The method according to claim 3, wherein the method further comprises:
determining the at least one downlink data block in the at least one data block based on the port indication information;
generating a packet based on the at least one downlink data block, wherein the packet comprises the at least one downlink data block; and
sending the packet through a downlink port of the central equipment.

5. The method according to claim 4, wherein the determining the at least one downlink data block in the at least one data block based on the port indication information comprises:
determining a downlink port identifier in the port indication information, wherein the downlink port identifier is used to identify whether the at least one data block has a downlink data block; and
when the downlink port identifier is a valid identifier indicating that at least one data block has a data block whose corresponding port is the destination port, determining that a data block whose destination port is the downlink port in the at least one data block is the downlink data block.

6. The method according to claim 5, wherein the determining that a data block whose destination port is the downlink port in the at least one data block is the downlink data block comprises:
obtaining a location of the downlink port identifier in all valid identifiers in the port indication information; and
determining a data block, in the at least one data block, corresponding to the location as the downlink data block.

7. The method according to any one of claims 1 to 6, wherein the method further comprises:
generating (401), by the central equipment, the is first packet;
sending (402), by the central equipment, the first packet to the network device;
receiving (405), by the central equipment, the device information from the network device; and
generating (406), by the central equipment, the network topology based on the device information.

8. The method according to claim 7, wherein a control port identifier in the port indication information is a valid identifier indicating that at least one data block has a data block whose corresponding port is the destination port, and the control port identifier is used to identify whether the at least one data block has a control data block.

9. The method according to claim 3 and according to claim 7, wherein a downlink port identifier in the port indication information is a valid identifier indicating that at least one data block has a data block whose corresponding port is the destination port, and the downlink port identifier is used to identify whether the at least one data block has a downlink data block.

10. The method according to claim 9, wherein a location of the downlink port identifier in all valid identifiers in the port indication information is corresponding to a location of the downlink data block in the at least one data block.

11. A network topology generation apparatus, wherein the apparatus is configured to work at a physical layer and wherein the apparatus comprises:
a receiving module (2301), configured to receive a first packet from central equipment, wherein the first packet comprises port indication information and at least one data block, and the port indication information is used to indicate a destination port of the network device to which each data block in the is first packet is to be sent; and
a sending module (2303), configured to send device information to the central equipment;
**characterized in that**
the apparatus further comprises a determining module (2302), configured to determine a control data block in the at least one data block based on the port indication information,
wherein the apparatus is configured to:
in response to receive the first packet, generate a packet by using a control port, wherein the packet comprises port indication information and a second
control data block, the port indication information is used to indicate a source port of the second control data block, and the second control data block carries the device information; wherein the source port is a port of the apparatus, and
wherein the sending module (2303) is configured to send the packet to the central equipment,
wherein the device information is sent according to a device information sending instruction in the control data block of the first packet, wherein the device information is configured to be used by the central equipment to generate the network topology using a function of constructing a network topology for the network device at the physical layer.

12. The apparatus according to claim 11, wherein the determining module (2302) is configured to:
determine a control port identifier in the port indication information, wherein the control port identifier is used to identify whether the at least one data block has a control data block; and
when the control port identifier is a valid identifier indicating that at least one data block has a data block whose corresponding port is the destination port, determine that a data block whose destination port is a control port in the at least one data block is the control data block.

13. The apparatus according to claim 11, wherein the at least one data block comprises at least one downlink data block; and
the at least one downlink data block carries the port indication information and the control data block that are to be sent to a next-level network device, or the at least one downlink data block carries data to be sent to a terminal.

## Patentansprüche

1. Verfahren zur Netzwerktopologieerstellung, wobei das Verfahren umfasst:
Empfangen (1102) eines ersten Pakets von einer zentralen Einrichtung durch ein Netzwerkgerät, das auf einer physischen Schicht arbeitet, wobei das erste Paket Anschlussanzeigeinformationen und mindestens einen Datenblock umfasst und die Anschlussanzeigeinformationen verwendet werden, um einen Zielanschluss eines weiteren Netzwerkgeräts anzuzeigen, an das jeder des mindestens einen Datenblocks im ersten Paket gesendet werden soll; und
Senden (1108) von Geräteinformationen durch das Netzwerkgerät an die zentrale Einrichtung;
wobei das Verfahren ferner umfasst:
in Reaktion auf den Empfang des ersten Pakets
Bestimmen (1103) des Steuerdatenblocks in dem mindestens einen Datenblock durch das Netzwerkgerät basierend auf den Anschlussanzeigeinformationen;
wobei das Senden der Geräteinformationen an die zentrale Einrichtung umfasst:
Erstellen (1104) eines Pakets durch das Netzwerkgerät durch Verwenden eines Steueranschlusses, wobei das Paket Anschlussanzeigeinformationen und einen zweiten Steuerdatenblock umfasst, die Anschlussanzeigeinformationen verwendet werden, um einen Quellenanschluss des zweiten Steuerdatenblocks anzuzeigen, und der zweite Steuerdatenblock die Geräteinformationen überträgt; wobei der Quellenanschluss des Steuerdatenblocks ein Steueranschluss des Netzwerkgeräts ist, und
Senden des Pakets durch das Netzwerkgerät an die zentrale Einrichtung,
wobei die Geräteinformationen gemäß einer Geräteinformationssendeanweisung im Steuerdatenblock des ersten Pakets gesendet werden, wobei die Geräteinformationen dazu ausgelegt sind, um von der zentralen Einrichtung zum Erstellen einer Netzwerktopologie auf der physischen Schicht unter Verwendung einer Funktion zum Aufbauen einer Netzwerktopologie für das Netzwerkgerät auf der physischen Schicht verwendet zu werden.

2. Verfahren nach Anspruch 1, wobei das Bestimmen des Steuerdatenblocks in dem mindestens einen Datenblock basierend auf den Anschlussanzeigeinformationen umfasst:
Bestimmen einer Steueranschlusskennung in den Anschlussanzeigeinformationen, wobei die Steueranschlusskennung verwendet wird, um zu identifizieren, ob der mindestens eine Datenblock einen Steuerdatenblock aufweist; und,
wenn die Steueranschlusskennung eine gültige Kennung ist, die anzeigt, dass mindestens ein Datenblock einen Datenblock aufweist, dessen entsprechender Anschluss der Zielanschluss ist, Bestimmen, dass ein Datenblock, dessen Zielanschluss ein Steueranschluss in dem mindestens einen Datenblock ist, der Steuerdatenblock ist.

3. Verfahren nach Anspruch 1, wobei der mindestens eine Datenblock mindestens einen Downlink-Datenblock umfasst; und
der mindestens eine Downlink-Datenblock die Anschlussanzeigeinformationen und den Steuerdatenblock überträgt, die an ein Netzwerkgerät einer nächsten Ebene gesendet werden sollen, oder der mindestens eine Downlink-Datenblock Daten überträgt, die an ein Endgerät gesendet werden sollen.

4. Verfahren nach Anspruch 3, wobei das Verfahren ferner umfasst:
Bestimmen des mindestens einen Downlink-Datenblocks in dem mindestens einen Datenblock basierend auf den Anschlussanzeigeinformationen;
Erstellen eines Pakets basierend auf dem mindestens einen Downlink-Datenblock, wobei das Paket den mindestens einen Downlink-Datenblock umfasst; und
Senden des Pakets über einen Downlink-Anschluss der zentralen Einrichtung.

5. Verfahren nach Anspruch 4, wobei das Bestimmen des mindestens einen Downlink-Datenblocks in dem mindestens einen Datenblock basierend auf den Anschlussanzeigeinformationen umfasst:
Bestimmen einer Downlink-Anschlusskennung in den Anschlussanzeigeinformationen, wobei die Downlink-Anschlusskennung verwendet wird, um zu identifizieren, ob der mindestens eine Datenblock einen Downlink-Datenblock aufweist; und,
wenn die Downlink-Anschlusskennung eine gültige Kennung ist, die anzeigt, dass mindestens ein Datenblock einen Datenblock aufweist, dessen entsprechender Anschluss der Zielanschluss ist, Bestimmen, dass ein Datenblock, dessen Zielanschluss der Downlink-Anschluss in dem mindestens einen Datenblock ist, der Downlink-Datenblock ist.

6. Verfahren nach Anspruch 5, wobei das Bestimmen, dass ein Datenblock, dessen Zielanschluss der Downlink-Anschluss in dem mindestens einen Datenblock ist, der Downlink-Datenblock ist, umfasst:
Erhalten einer Position der Downlink-Anschlusskennung in allen gültigen Kennungen in den Anschlussanzeigeinformationen; und Bestimmen eines Datenblocks in dem mindestens einen Datenblock, der der Position entspricht, als den Downlink-Datenblock.

7. Verfahren nach einem der Ansprüche 1 bis 6, wobei das Verfahren ferner umfasst:
Erstellen (401) des ersten Pakets durch die zentrale Einrichtung;
Senden (402) des ersten Pakets durch die zentrale Einrichtung an das Netzwerkgerät; Empfangen (405) der Geräteinformationen durch die zentrale Einrichtung vom Netzwerkgerät; und
Erstellen (406) der Netzwerktopologie durch die zentrale Einrichtung basierend auf den Geräteinformationen.

8. Verfahren nach Anspruch 7, wobei eine Steueranschlusskennung in den Anschlussanzeigeinformationen eine gültige Kennung ist, die anzeigt, dass mindestens ein Datenblock einen Datenblock aufweist, dessen entsprechender Anschluss der Zielanschluss ist, und die Steueranschlusskennung verwendet wird, um zu identifizieren, ob der mindestens eine Datenblock einen Steuerdatenblock aufweist.

9. Verfahren nach Anspruch 3 und nach Anspruch 7, wobei eine Downlink-Anschlusskennung in den Anschlussanzeigeinformationen eine gültige Kennung ist, die anzeigt, dass mindestens ein Datenblock einen Datenblock aufweist, dessen entsprechender Anschluss der Zielanschluss ist, und die Downlink-Anschlusskennung verwendet wird, um zu identifizieren, ob der mindestens eine Datenblock einen Downlink-Datenblock aufweist.

10. Verfahren nach Anspruch 9, wobei eine Position der Downlink-Anschlusskennung in allen gültigen Kennungen in den Anschlussanzeigeinformationen einer Position des Downlink-Datenblocks in dem mindestens einen Datenblock entspricht.

11. Vorrichtung zur Netzwerktopologieerstellung, wobei die Vorrichtung dazu ausgelegt ist, auf einer physischen Schicht zu arbeiten, und wobei die Vorrichtung umfasst:
ein Empfangsmodul (2301), das zum Empfangen eines ersten Pakets von einer zentralen Einrichtung ausgelegt ist, wobei das erste Paket Anschlussanzeigeinformationen und mindestens einen Datenblock umfasst und die Anschlussanzeigeinformationen verwendet werden, um einen Zielanschluss des Netzwerkgeräts anzuzeigen, an das jeder Datenblock im ersten Paket gesendet werden soll; und
ein Sendemodul (2303), das zum Senden von Geräteinformationen an die zentrale Einrichtung ausgelegt ist;
**dadurch gekennzeichnet, dass**
die Vorrichtung ferner ein Bestimmungsmodul (2302) umfasst, das zum Bestimmen eines Steuerdatenblocks in dem mindestens einen Datenblock basierend auf den Anschlussanzeigeinformationen ausgelegt ist,
wobei die Vorrichtung ausgelegt ist zum:
in Reaktion auf den Empfang des ersten Pakets
Erstellen eines Pakets durch Verwenden eines Steueranschlusses, wobei das Paket Anschlussanzeigeinformationen und einen zweiten Steuerdatenblock umfasst, wobei die Anschlussanzeigeinformationen verwendet werden, um einen Quellenanschluss des zweiten Steuerdatenblocks anzuzeigen, und der zweite Steuerdatenblock die Geräteinformationen überträgt; wobei der Quellenanschluss ein Anschluss der Vorrichtung ist, und wobei das Sendemodul (2303) zum Senden des Pakets an die zentrale Einrichtung ausgelegt ist,
wobei die Geräteinformationen gemäß einer Geräteinformationssendeanweisung im Steuerdatenblock des ersten Pakets gesendet werden,
wobei die Geräteinformationen dazu ausgelegt sind, von der zentralen Einrichtung zum Erstellen der Netzwerktopologie unter Verwendung einer Funktion zum Konstruieren einer Netzwerktopologie für das Netzwerkgerät auf der physischen Schicht verwendet zu werden.

12. Vorrichtung nach Anspruch 11, wobei das Bestimmungsmodul (2302) ausgelegt ist zum:
Bestimmen einer Steueranschlusskennung in den Anschlussanzeigeinformationen, wobei die Steueranschlusskennung verwendet wird, um zu identifizieren, ob der mindestens eine Datenblock einen Steuerdatenblock aufweist; und,
wenn die Steueranschlusskennung eine gültige Kennung ist, die anzeigt, dass mindestens ein Datenblock einen Datenblock aufweist, dessen entsprechender Anschluss der Zielanschluss ist, Bestimmen, dass ein Datenblock, dessen Zielanschluss ein Steueranschluss in dem mindestens einen Datenblock ist, der Steuerdatenblock ist.

13. Vorrichtung nach Anspruch 11, wobei der mindestens eine Datenblock mindestens einen Downlink-Datenblock umfasst; und
der mindestens eine Downlink-Datenblock die Anschlussanzeigeinformationen und den Steuerdatenblock überträgt, die an ein Netzwerkgerät einer nächsten Ebene gesendet werden sollen, oder der mindestens eine Downlink-Datenblock Daten überträgt, die an ein Endgerät gesendet werden sollen.

## Revendications

1. Procédé de génération de topologie de réseau, le procédé comprenant :
la réception (1102), par un dispositif de réseau travaillant au niveau d'une couche physique, d'un premier paquet provenant d'un équipement central, le premier paquet comprenant des informations d'indication de port et au moins un bloc de données, et
les informations d'indication de port étant utilisées pour indiquer un port de destination d'un autre dispositif de réseau auquel chacun des au moins un bloc de données dans le premier paquet doit être envoyé ; et
l'envoi (1108), par le dispositif de réseau, d'informations de dispositif à l'équipement central ;
le procédé comprenant en outre :
en réponse à la réception du premier paquet, la détermination (1103), par le dispositif de réseau, du bloc de données de commande dans l'au moins un bloc de données sur la base des informations d'indication de port ;
l'envoi d'informations de dispositif à l'équipement central comprenant :
la génération (1104), par le dispositif de réseau, d'un paquet en utilisant un port de commande, le paquet comprenant des informations d'indication de port et un second bloc de données de commande, les informations d'indication de port étant utilisées pour indiquer un port source du second bloc de données de commande, et le second bloc de données de commande transportant les informations de dispositif ; le port source du bloc de données de commande étant un port de commande du dispositif de réseau, et
l'envoi, par le dispositif de réseau, du paquet à l'équipement central,
les informations de dispositif étant envoyées conformément à une instruction d'envoi d'informations de dispositif dans le bloc de données de commande du premier paquet, les informations de dispositif étant configurées pour être utilisées par l'équipement central pour générer une topologie de réseau au niveau de la couche physique à l'aide d'une fonction de construction d'une topologie de réseau pour le dispositif de réseau au niveau de la couche physique.

2. Procédé selon la revendication 1, la détermination du bloc de données de commande dans l'au moins un bloc de données sur la base des informations d'indication de port comprenant :
la détermination d'un identifiant de port de commande dans les informations d'indication de port, l'identifiant de port de commande étant utilisé pour identifier si l'au moins un bloc de données a un bloc de données de commande ; et
lorsque l'identifiant de port de commande est un identifiant valide indiquant que l'au moins un bloc de données possède un bloc de données dont le port correspondant est le port de destination, la détermination qu'un bloc de données dont le port de destination est un port de commande dans l'au moins un bloc de données est le bloc de données de commande.

3. Procédé selon la revendication 1, l'au moins un bloc de données comprenant au moins un bloc de données de liaison descendante ; et
l'au moins un bloc de données de liaison descendante transportant les informations d'indication de port et le bloc de données de commande qui doivent être envoyés à un dispositif de réseau de niveau suivant, ou l'au moins un bloc de données de liaison descendante transportant des données qui doivent être envoyées à un terminal.

4. Procédé selon la revendication 3, le procédé comprenant en outre :
la détermination de l'au moins un bloc de données de liaison descendante dans l'au moins un bloc de données sur la base des informations d'indication de port ;
la génération d'un paquet sur la base de l'au moins un bloc de données de liaison descendante, le paquet comprenant l'au moins un bloc de données de liaison descendante ; et
l'envoi du paquet par un port de liaison descendante de l'équipement central.

5. Procédé selon la revendication 4, la détermination de l'au moins un bloc de données de liaison descendante dans l'au moins un bloc de données sur la base des informations d'indication de port comprenant :
la détermination d'un identifiant de port de liaison descendante dans les informations d'indication de port, l'identifiant de port de liaison descendante étant utilisé pour identifier si l'au moins un bloc de données a un bloc de données de liaison descendante ; et
lorsque l'identifiant de port de liaison descendante est un identifiant valide indiquant qu'au moins un bloc de données possède un bloc de données dont le port correspondant est le port de destination, la détermination qu'un bloc de données dont le port de destination est le port de liaison descendante dans l'au moins un bloc de données est le bloc de données de liaison descendante.

6. Procédé selon la revendication 5, la détermination qu'un bloc de données dont le port de destination est le port de liaison descendante dans l'au moins un bloc de données est le bloc de données de liaison descendante comprenant :
l'obtention d'un emplacement de l'identifiant de port de liaison descendante parmi tous les identifiants valides dans les informations d'indication de port ; et
la détermination d'un bloc de données, dans l'au moins un bloc de données, correspondant à l'emplacement en tant que bloc de données de liaison descendante.

7. Procédé selon l'une quelconque des revendications 1 à 6, le procédé comprenant en outre :
la génération (401), par l'équipement central, du premier paquet ;
l'envoi (402), par l'équipement central, du premier paquet au dispositif de réseau ;
la réception (405), par l'équipement central, des informations de dispositif en provenance du dispositif de réseau ; et
la génération (406), par l'équipement central, de la topologie de réseau sur la base des informations de dispositif.

8. Procédé selon la revendication 7, un identifiant de port de commande dans les informations d'indication de port étant un identifiant valide indiquant qu'au moins un bloc de données a un bloc de données dont le port correspondant est le port de destination, et l'identifiant de port de commande étant utilisé pour identifier si l'au moins un bloc de données a un bloc de données de commande.

9. Procédé selon la revendication 3 et selon la revendication 7, un identifiant de port de liaison descendante dans les informations d'indication de port étant un identifiant valide indiquant qu'au moins un bloc de données a un bloc de données dont le port correspondant est le port de destination, et l'identifiant de port de liaison descendante étant utilisé pour identifier si l'au moins un bloc de données a un bloc de données de liaison descendante.

10. Procédé selon la revendication 9, un emplacement de l'identifiant de port de liaison descendante parmi tous les identifiants valides dans les informations d'indication de port correspondant à un emplacement du bloc de données de liaison descendante dans l'au moins un bloc de données.

11. Appareil de génération de topologie de réseau, l'appareil étant configuré pour travailler au niveau d'une couche physique et l'appareil comprenant :
un module de réception (2301), configuré pour recevoir un premier paquet en provenance de l'équipement central, le premier paquet comprenant des informations d'indication de port et au moins un bloc de données, et les informations d'indication de port étant utilisées pour indiquer un port de destination du dispositif de réseau auquel chaque bloc de données dans le premier paquet doit être envoyé ; et
un module d'envoi (2303), configuré pour envoyer des informations de dispositif à l'équipement central ;
**caractérisé en ce que**
l'appareil comprend en outre un module de détermination (2302), configuré pour déterminer un bloc de données de commande dans l'au moins un bloc de données sur la base des informations d'indication de port,
l'appareil étant configuré pour :
en réponse à la réception du premier paquet, générer un paquet en utilisant un port de commande, le paquet comprenant des informations d'indication de port et un deuxième bloc de données de commande, les informations d'indication de port étant utilisées pour indiquer un port source du deuxième bloc de données de commande, et le deuxième bloc de données de commande transportant les informations de dispositif ;
le port source étant un port de l'appareil, et
le module d'envoi (2303) étant configuré pour envoyer le paquet à l'équipement central,
les informations de dispositif étant envoyées conformément à une instruction d'envoi d'informations de dispositif dans le bloc de données de commande du premier paquet, les informations de dispositif étant configurées pour être utilisées par l'équipement central pour générer la topologie de réseau à l'aide d'une fonction de construction d'une topologie de réseau pour le dispositif de réseau au niveau de la couche physique.

12. Appareil selon la revendication 11, le module de détermination (2302) étant configuré pour :
déterminer un identifiant de port de commande dans les informations d'indication de port, l'identifiant de port de commande étant utilisé pour identifier si l'au moins un bloc de données a un bloc de données de commande ; et
lorsque l'identifiant de port de commande est un identifiant valide indiquant qu'au moins un bloc de données possède un bloc de données dont le port correspondant est le port de destination, déterminer qu'un bloc de données dont le port de destination est un port de commande dans l'au moins un bloc de données est le bloc de données de commande.

13. Appareil selon la revendication 11, l'au moins un bloc de données comprenant au moins un bloc de données de liaison descendante ; et
l'au moins un bloc de données de liaison descendante transportant les informations d'indication de port et le bloc de données de commande qui doivent être envoyés à un dispositif de réseau de niveau suivant, ou l'au moins un bloc de données de liaison descendante transportant des données qui doivent être envoyées à un terminal.
